# EUROPEAN PATENT SPECIFICATION

(11) **EP 1 542 447 B1**
(45) Date of publication and mention of the grant of the patent: **19.12.2012**
(21) Application number: 03784630.0
(22) Date of filing: 08.08.2003
(51) Int. Cl.: H04N 1/40, H04N 1/387, G06T 3/40, G06T 5/00

(54) **IMAGE DATA PROCESSING DEVICE, IMAGE DATA PROCESSING METHOD, PROGRAM, RECORDING MEDIUM, AND IMAGE READING DEVICE**
BILDDATENVERARBEITUNGSEINRICHTUNG, BILDDATENVERARBEITUNGSVERFAHREN, PROGRAMM, AUFZEICHNUNGSMEDIUM UND BILDLESEEINRICHTUNG
DISPOSITIF ET PROCEDE DE TRAITEMENT DE DONNEES D'IMAGE, PROGRAMME, SUPPORT D'ENREGISTREMENT ET DISPOSITIF DE LECTURE D'IMAGE

(30) Priority: 08.08.2002 JP 2002231194; 17.09.2002 JP 2002270220
(43) Date of publication of application: 15.06.2005
(73) Proprietor: Ricoh Company, Ltd., Tokyo 143-8555 (JP)
(72) Inventor: OHKAWA, Satoshi RICOH COMPANY, LIMITED, Ohta-ku, Tokyo 143-8555 (JP); KAWAMOTO, Hiroyuki RICOH COMPANY, LIMITED, Ohta-ku, Tokyo 143-8555 (JP); OHYAMA, Maki c/o Ricoh Co., Ltd. Intellectual Property Department, Legal Division, Yokohama-shi, Kanagawa-ken 222-8530 (JP); YOSHIDA, Tomoyuki RICOH COMPANY, LIMITED, Ohta-ku, Tokyo 143-8555 (JP); MIYAMOTO, Isao RICOH COMPANY, LIMITED, Ohta-ku, Tokyo 143-8555 (JP); TOGAMI, Atsushi RICOH COMPANY, LIMITED, Ohta-ku, Tokyo 143-8555 (JP); NISHITA, Taira c/o Ricoh Co., Ltd. Intellectual Property Department, Legal Division, Yokohama-shi, Kanagawa-ken 222-8530 (JP); SHIRATA, Yasunobu RICOH COMPANY, LIMITED, Ohta-ku, Tokyo 143-8555 (JP)
(74) Representative: Schwabe - Sandmair - Marx
(86) International application number: PCT/JP2003/010168
(87) International publication number: WO 2004/015984

(56) References cited:
- JP-A- 07 177 347
- JP-A- 11 027 517
- JP-A- 11 355 561
- JP-A- 2001 268 351
- US-A- 5 920 646
- US-A- 6 002 841
- US-B1- 6 226 397
- US-B1- 6 373 990

## Description

### TECHNICAL FIELD

The present invention relates to an image data processing apparatus, an image data processing method, a computer program, a recording medium, and an image reading apparatus. In particular, the present invention relates to an image data processing apparatus that has image storing means like a hard disk drive (HDD) for storing image data, applies required image processing for improving a quality of an image to the image data stored in this image storing means, and sends the image data to an external apparatus. In addition, the present invention relates to an image processing method that improves a quality of an image in this way, a computer program for causing a computer, which controls the image data processing apparatus, to function as means for performing such image processing, a recording medium having stored therein such a program, and an image reading apparatus connectable to an electric communication line, the image reading apparatus having means for subjecting read image data to image processing in the image reading apparatus itself and sending the image data to a storage like a PC (Personal Computer) connected to the electric communication line.

### BACKGROUND ART

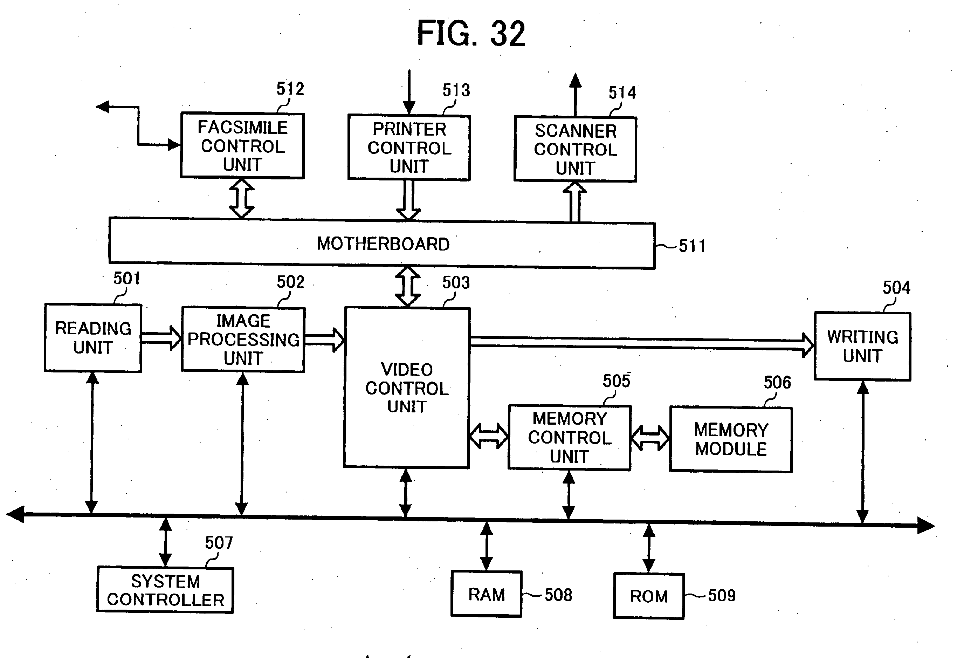

As an image data processing apparatus that handles image data, for example, a digital multifunction product as shown in Fig. 32 has been known conventionally. First, this digital multifunction product will be explained. Fig. 32 is a block diagram of the digital multifunction product.

As shown in Fig. 32, the digital multifunction product includes a copying machine part and other units. The copying machine part includes component such as a reading unit 501, an image processing unit 502, a video control unit 503, a writing unit 504, a memory control unit 505, and a memory module 506. The other units are a facsimile control unit 512, a printer control unit 513, and a scanner control unit 514 are additionally connected via a motherboard 511.

In other words, the facsimile control unit 512, the printer control unit 513, and the scanner control unit 514 are added on to one system constituted by the series of components, i.e., the copying machine part, whose operations are controlled by a system controller 507, a RAM 508, and a ROM 509.

Although not shown with a figure, a digital multifunction product has also been devised, which, rather than adding the respective units on to the copying machine, combines a copying function part, a facsimile function part, a printer function part, and the like as units, respectively, and processes image data inputted from these respective units efficiently.

In accordance with an increase in functions of the digital multifunction product, transfer control for image data has become an extremely important element from the viewpoint of improvement in performance of a system whether the digital multifunction product as described above is one in which functional units are added on via a motherboard or respective functional units are distinctively manufactured and combined without being specialized as a copying machine.

Therefore, image data is compressed as required taking into account the viewpoint of transfer control, that is, transfer efficiency of the image data among the respective functional units and storing efficiency in a storage unit like a memory. In other words, an improvement in performance of the digital multifunction product is realized by compressing the image data.

In such digital multifunction products, an image storing device such as a hard disk drive (HDD) is separately provided to store image data, which is read in the reading unit 501 or received from an external apparatus connected via a network, therein. According to a request from an external apparatus, image data stored in the image storing device is also sent to the external apparatus. Naturally, the image data is subjected to compression processing when it is stored in the image storing device.

However, when it is attempted to reproduce an image based on image data stored in this way, concentration unevenness called moiré may occur so that the image quality is deteriorated. The moiré, for example, could be generated due to any of the following reasons:
1) when an image having a regular light and shade distribution like a halftone dot image is read, interference occurs between a halftone dot period of an original and a sampling period at the time of image reading,
2) when encoding processing is applied to image data containing a regular light and shade distribution for compression of the image data, interference occurs between the halftone dot period and an encoding processing period, and
3) a high-frequency component occurs due to a saturation operation by spatial filter processing or nonlinear processing like steep gamma processing.

In addition, conventionally, image reading apparatuses like a scanner and a personal computer (PC) are connected via an electric communication line like a LAN (Local Area Network) or the Internet, an image is read by the image reading apparatus according to an instruction from the PC, the read image data is transferred to the PC, and image processing like spatial filter processing is performed by image processing software installed in the PC. When the image is printed by a printing apparatus directly connected to the PC or the image reading apparatus includes a printing apparatus, the image data subjected to the image processing is transferred to the printing apparatus of the image reading apparatus and printed.

Therefore, if the location where the image reading apparatus has been installed is far from the place where the PC is installed, the user has to move to the location where the PC is installed to perform image processing.

As a method of controlling the occurrence of the moiré by, there is an approach of performing smoothing filter processing for smoothing image data locally or performing weak spatial filter processing or smooth gamma processing, which does not cause saturation.

However, in such a method, there is a problem in that, although moiré can be reduced in a halftone dot part in an image, sharpness of the image, in particular, an edge part of the image falls, the image is blurred or a resolution falls in a line drawing part like a character, and an image quality cannot be improved sufficiently. To solve this problem, Japanese Patent Application Laid-Open Publication No. H5-41793 (paragraphs 0021, 0022, and 0023, and Fig. 7) discloses a digital copying machine that is adapted to control moire.

In the digital copying machine disclosed in Japanese Patent Application Laid-Open Publication No. H5-41793, moiré correction processing for generating image data, which has a frequency higher than a sampling frequency of original image data, with interpolation and converting the image data into the image data of the original frequency is performed, whereby reduction in moiré is realized. In other words, image data D'n at a virtual sampling point with respect to read arbitrary image data Dn is generated by a so-called cubic function interpolation, and the image data Dn and D'n are synthesized. With this synthesizing, for example, when it is assumed that the image data Dn and D'n have a resolution of 400 DPI, respectively, the synthesized image data has a resolution of 800 DPI. Thus, this is equivalent to reading image, data at a sampling frequency twice as high as that for the image data Dn and D'n, which almost eliminates occurrence of moiré with respect to a halftone dot original.

However, with this method of generating the image data D'n of the virtual sampling point and synthesizing the image data D'n with the original image data Dn, moiré due to a saturation operation of a spatial filter cannot be controlled. In other words, since the filter processing and the gamma correction processing are applied to image data of an original resolution after the moiré correction processing, moiré occurs again due to interference that is caused at the points of the processing even if moiré is reduced by the moiré correction processing, and an effect of reducing moiré is not sufficient as a whole.

If a pixel density at the time of reading is increased, an image with less moiré is obtained. However, since a reading apparatus having an equivalent pixel resolution is required for this purpose, it is difficult to realize the increase in the pixel density in terms of a technique and cost. In particular, when image data received from the outside is stored, even if a reading apparatus with a high resolution is used as a part of reading apparatuses, if image data read by an apparatus with a low resolution is mixed, a measure for reducing moiré has to be taken for the image data separately.

In the copying machine disclosed in Japanese Patent Application Laid-Open Publication No. H5-41793, image data, in which occurrence of moiré is eliminated, is not further subjected to image processing to be sent to a PC or the like.

The present invention has been devised to solve the problems due to the conventional technique. It is an object of the present invention to, when image data stored in image data storing means is sent to an external apparatus, reduce occurrence of moiré at the time when the image data is reproduced as an image with a simple constitution while maintaining sharpness of the image. In addition, it is another object of the present invention to, when an image reading apparatus like a scanner is connected to a PC from a distance via an electric communication line like a LAN or the Internet, allow a user to subject image data read by the image reading apparatus to image processing in the image reading apparatus itself without moving to an installation location of the PC, and when the image data read by the image reading apparatus is subjected to the image processing in the image reading apparatus, eliminate occurrence of moiré due to a saturation operation of spatial filter processing, apply image processing to image data without moiré, and transfer the image data to the PC or the like.

US-B1-6 373 990 pertains to an image processing method and apparatus for applying spatial filter processing to image data utilizing luminance-density conversion.

EP-1261195 pertains to an image processing method and apparatus to reduce moiré fringes generated in a fine pitch halftone image.

The present invention is defined by the subject-matter of the attended claims.

To solve the problems explained above and to achieve the objects, an image data processing apparatus according to an aspect of the present invention includes an image data storing unit that stores image data; a spatial filter processing unit that applies spatial filter processing, in which a dynamic range for output is set wider than a dynamic range for input, to the image data stored in the image data storing unit; a resolution increase processing unit that applies resolution conversion processing for converting a present resolution into a resolution higher than the present resolution to the image data after the spatial filter processing by the spatial filter processing unit; a gamma correction unit that applies gamma correction processing to the image data after the resolution conversion processing by the resolution increase processing unit; and a transmitting unit that sends the image data after the gamma correction processing by the gamma correction unit to an external apparatus.

An image data processing apparatus according to another aspect of the present invention includes a image data storing unit that stores image data; a resolution increase processing unit that applies resolution conversion processing for converting a present resolution into a resolution higher than the present resolution to the image data stored in the image data storing unit; a spatial filter processing unit that applies spatial filter processing to the image data after the resolution conversion processing by the resolution increase processing unit; a gamma correction unit that applies gamma correction processing to the image data after the spatial filter processing by the spatial filter processing unit; a resolution reduction processing unit that applies resolution conversion processing for converting a present resolution into a resolution lower than the present resolution to the image data after the gamma correction processing by the gamma correction unit; and a transmitting unit that sends the image data after the resolution conversion processing by the resolution reduction processing unit to an external apparatus.

Furthermore, the image data processing apparatus includes a resolution reduction processing unit that applies resolution conversion processing for converting a present pixel density into a pixel density lower than the present pixel density to the image data after the processing by the gamma correction unit.

Moreover, in the image data processing apparatus, the resolution reduction processing unit converts a resolution of the image data into a resolution before the resolution conversion processing by the resolution increase processing unit.

Furthermore, the image data processing apparatus includes a format converting unit that converts the image data to be sent by the transmitting unit into a general-purpose format that can be inspected in the external apparatus.

Moreover, in the image data processing apparatus, the resolution increase processing unit performs the resolution conversion processing only for a main scanning direction.

Furthermore, in the image data processing apparatus, the resolution increase processing unit performs resolution conversion processing for converting a resolution into a resolution obtained by multiplying a present invention by an integer equal to or larger than two.

Moreover, in the image data processing apparatus, the resolution increase processing unit performs resolution conversion processing for converting image data with a resolution of 600 dpi into image data with a resolution of 1200 dpi.

An image data processing method according to still another aspect of the present invention includes applying spatial filter processing, in which a dynamic range for output is set wider than a dynamic range for input, to image data to be inputted; applying resolution conversion processing for converting a density into a high density to the image data after the spatial filter processing; applying gamma correction processing to the image data after the resolution conversion processing; and sending the image data after the gamma correction processing to an external apparatus.

An image data processing method according to still another aspect of the present invention includes applying resolution conversion processing for converting a resolution into a high resolution to image data to be inputted; applying spatial filter processing to the image data after the resolution conversion processing; applying gamma correction processing to the image data after the spatial filter processing; applying resolution conversion processing for converting a resent resolution into a resolution lower than the present resolution to the image data after the gamma correction processing; and sending the image data after the resolution conversion processing to an external apparatus.

Furthermore, the image data processing method includes applying resolution conversion processing for converting a present resolution into a resolution lower than the present resolution to the image data after performing the gamma correction processing.

Moreover, the image data processing method includes converting a resolution of the image data into a resolution before performing the resolution conversion processing for converting a resolution into a high resolution by the resolution conversion processing for converting a resolution into a low resolution.

Furthermore, the image data processing method includes converting the image data to be sent at the sending into a general-purpose format that can be inspected in the external apparatus.

Moreover, in the image data processing method, the resolution conversion processing includes performing the resolution conversion processing only for a main scanning direction.

Furthermore, in the image data processing method, the resolution conversion processing includes performing the resolution conversion processing for converting a resolution into a resolution obtained by multiplying a present invention by an integer equal to or larger than two.

Moreover, in the image data processing method, the resolution conversion processing includes performing the resolution conversion processing for converting image data with a resolution of 600 dpi into image data with a resolution of 1200 dpi.

According to these inventions, occurrence of moiré at the time when image data is reproduced as an image in an external apparatus in a transmission destination can be reduced. In this case, sharpness of the image can also be maintained.

A computer program according to still another aspect of the present invention includes instructions which when executed on a computer cause the computer to execute applying spatial filter processing, in which a dynamic range for output is set wider than a dynamic range for input, to image data to be inputted; applying resolution conversion processing for converting a density into a high density to the image data after the spatial filter processing; applying gamma correction processing to the image data after the resolution conversion processing; and sending the image data after the gamma correction processing to an external apparatus

A computer program according to still another aspect of the present invention instructions which when executed on a computer cause the computer to execute applying resolution conversion processing for converting a resolution into a high resolution to image data to be inputted; applying spatial filter processing to the image data after the resolution conversion processing; applying gamma correction processing to the image data after the spatial filter processing; applying resolution conversion processing for converting a present resolution into a resolution lower than the present resolution to the image data after the gamma correction processing; and sending the image data after the resolution conversion processing to an external apparatus.

Furthermore, the computer program further causes the computer to execute applying resolution conversion processing for converting a present resolution into a resolution lower than the present resolution to the image data after the gamma correction processing.

Moreover, the computer program further causes the computer to execute converting a resolution of the image data into a resolution before performing the resolution conversion processing for converting a resolution into a high resolution by the resolution conversion processing for converting a resolution into a low resolution.

Furthermore, the computer program further causes the computer to execute converting the image data to be sent at the sending into a general-purpose format that can be inspected in the external apparatus.

Moreover, in the computer program the resolution conversion processing includes performing the resolution conversion processing only for a main scanning direction.

Furthermore, in the computer program the resolution conversion processing includes performing the resolution conversion processing for converting a resolution into a resolution obtained by multiplying a present invention by an integer equal to or larger than two.

Moreover, in the computer program the resolution conversion processing includes performing the resolution conversion processing for converting image data with a resolution of 600 dpi into image data with a resolution of 1200 dpi.

According to these inventions, in addition to realizing the above-mentioned actions and advantages, it is possible to cause the computer included in the image data processing apparatus to function as means for performing the image processing described above.

A computer readable recording medium according to still another aspect of the present invention has recorded therein the above computer program.

According to this invention, in addition to realizing the above-mentioned actions and advantages, it is possible to cause a computer, which does not store the program, to store the program and function as means for performing the image processing described above through execution of the program.

An image reading apparatus according to an example is connectable to an electric communication line, and includes a spatial filter processing unit that performs spatial filter processing so as to expand a predetermined dynamic range read by the image reading apparatus and a dynamic range of an original data of a resolution; a first resolution converting unit that converts the resolution of the original data for which the dynamic range is expanded into a density higher than a present pixel density, and converts the dynamic range of the original data of the resolution, for which the dynamic range is expanded and which is converted into a high density, to be brought back to the predetermined dynamic range; a second resolution converting unit that converts the resolution of the original data of the high density resolution, for which the dynamic range is converted, to be brought back to the predetermined resolution; and a transmitting unit that sends the original data of the resolution brought back to the predetermined resolution.

Furthermore, in the image reading apparatus the spatial filter processing unit calculates a maximum tone value of the original data after the spatial filter processing based on a spatial filter factor set in advance and expands the dynamic range of the original data to be equal to or more than the value.

According to these examples, since image processing is performed by the image reading apparatus, a user does not have to return to a PC or the like to perform image processing, and convenience is improved. In this case, it is possible to control occurrence of moiré based on a saturation operation and generate image data with a high image quality, and transfer the image data to an external apparatus like a PC or a printing apparatus.

Furthermore, in the image reading apparatus the transmitting unit compresses the original data and sends the original data.

Moreover, in the image reading apparatus the transmitting unit compresses the original data with reversible coding and sends the original data.

According to these examples, it is possible to increase a speed of transfer to an external storage while controlling occurrence of moiré and reduce a storage capacity of the external storage.

Furthermore, the image reading apparatus further includes a tone processing unit that applies processing concerning a halftone to the original data.

Moreover, in the image reading apparatus the tone processing unit performs processing for converting the original data of the resolution, for which the dynamic range is expanded and which is converted into a high density, into a halftone of two tones.

Furthermore, in the image reading apparatus the tone processing unit performs processing for dividing the original data of the resolution, for which the dynamic range is expanded and which is converted into a high density, to a maximum value and a minimum value of the dynamic range according to a predetermined threshold value and processing for converting the divided original data into a halftone of two tones.

Moreover, the image reading apparatus further includes a gamma correction processing unit that applies gamma correction processing to the original data.

According to these examples, it is possible to control occurrence of moiré due to steep gamma correction and obtain tone processed data with a high image quality.

### BRIEF DESCRIPTION OF THE DRAWINGS

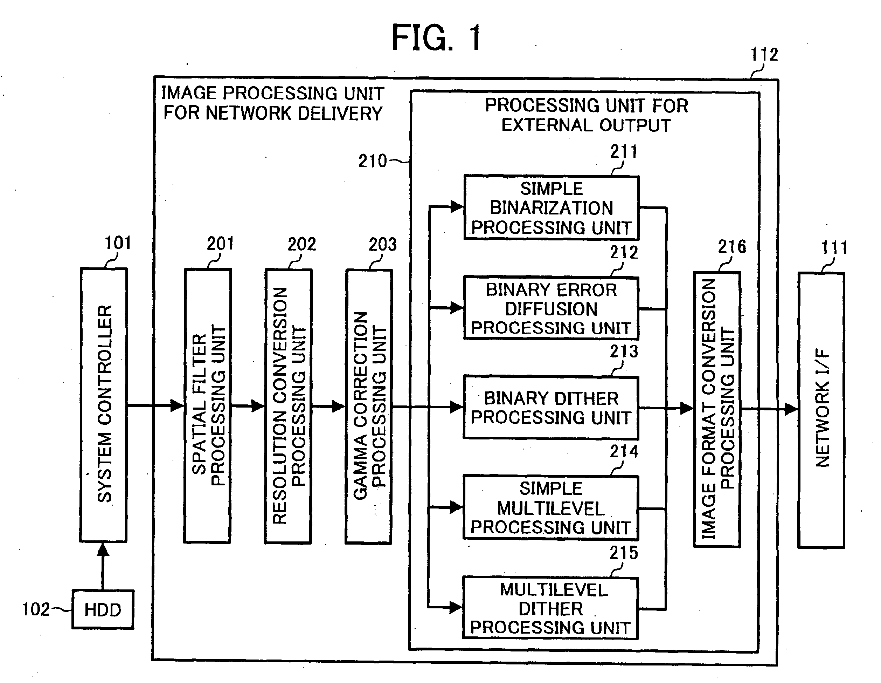

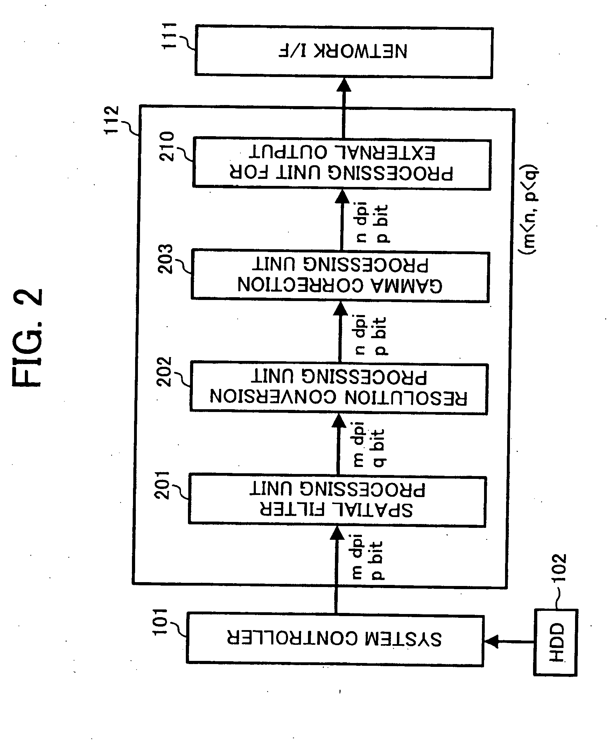

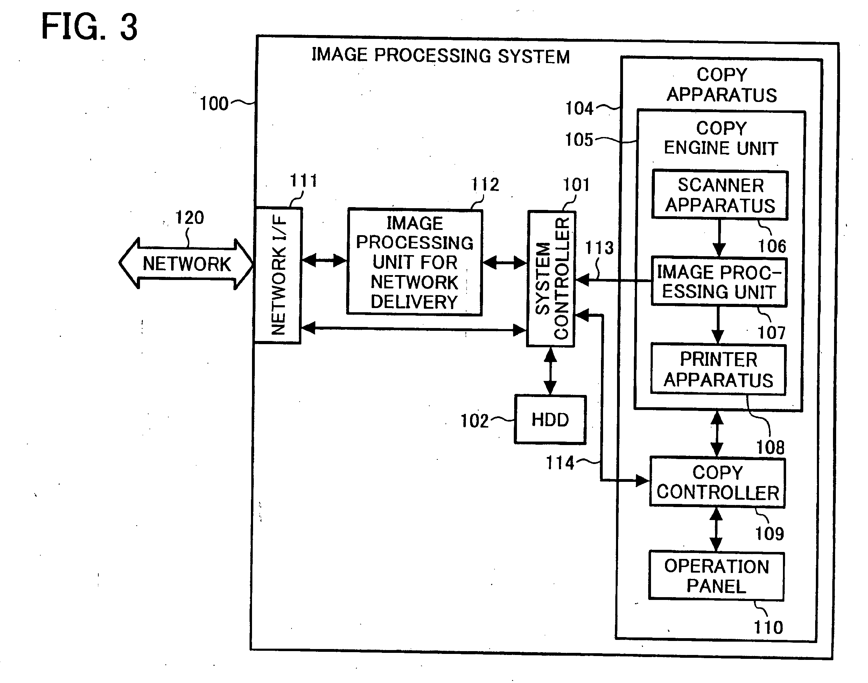

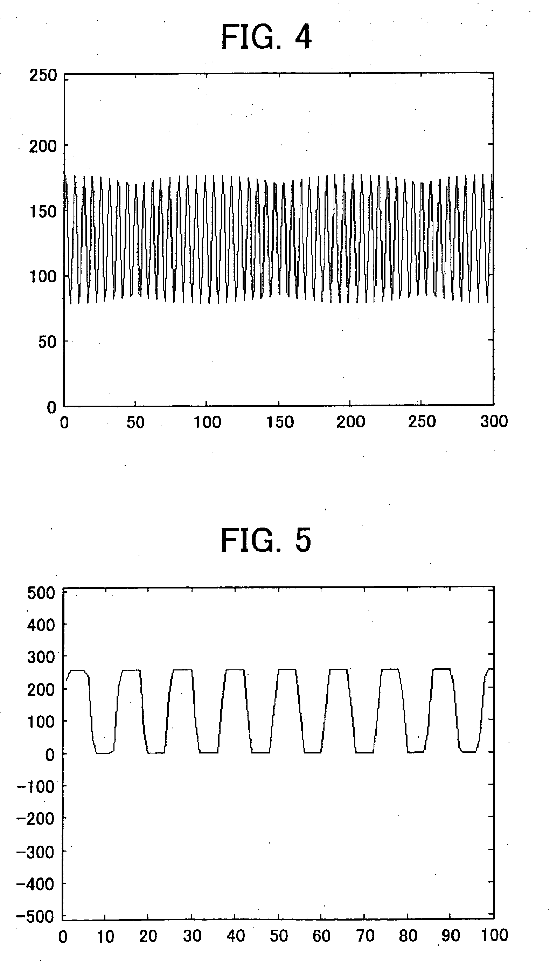

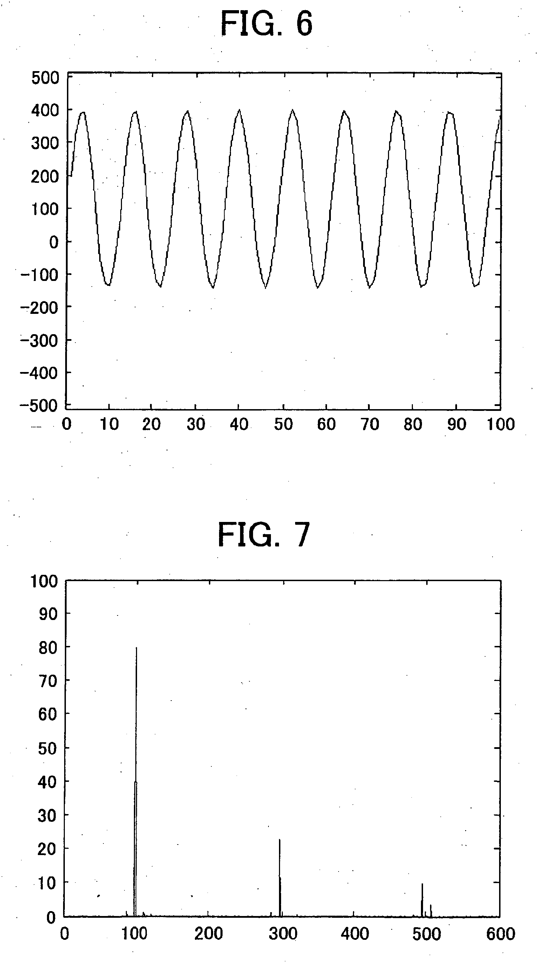

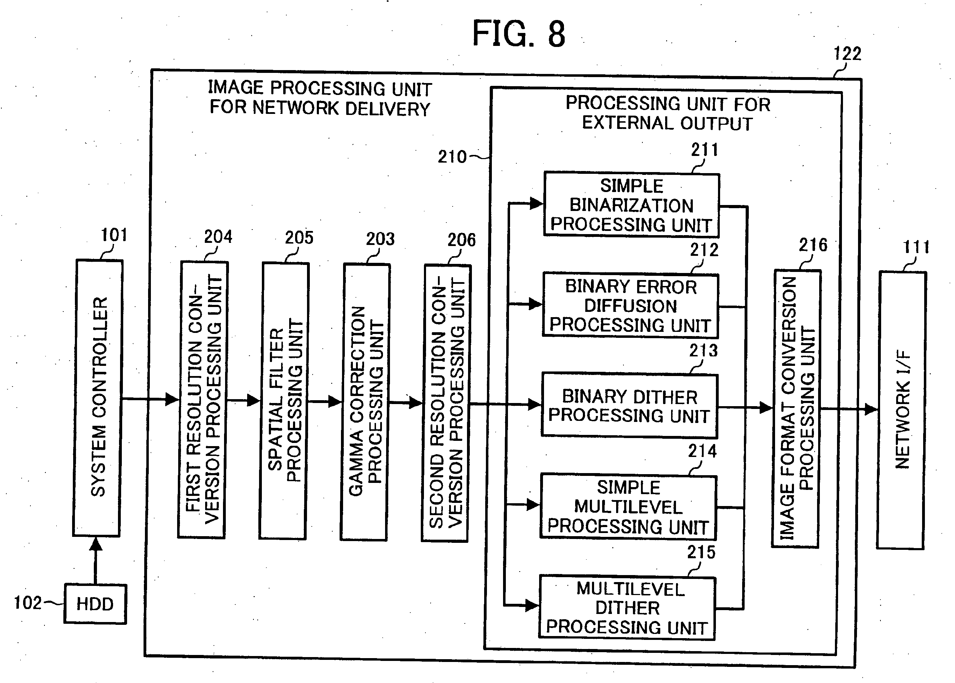

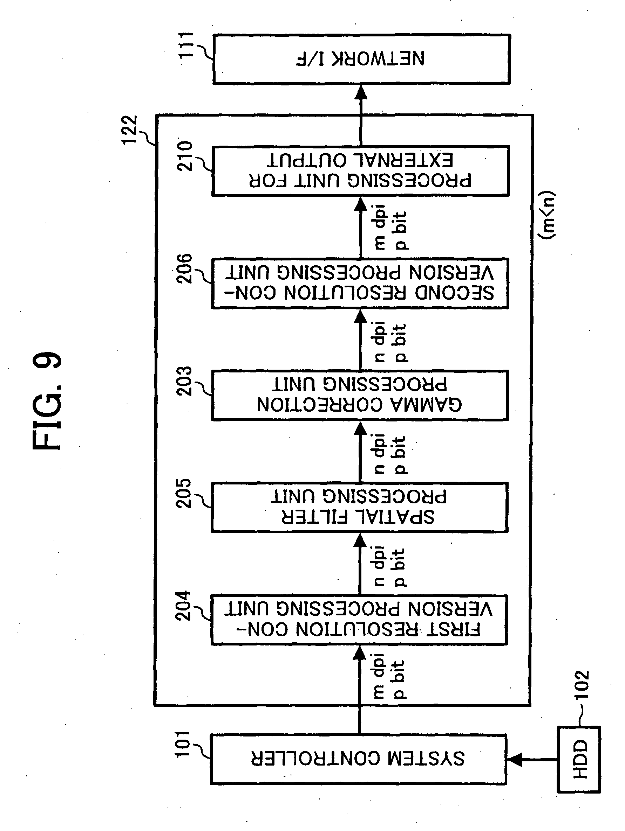

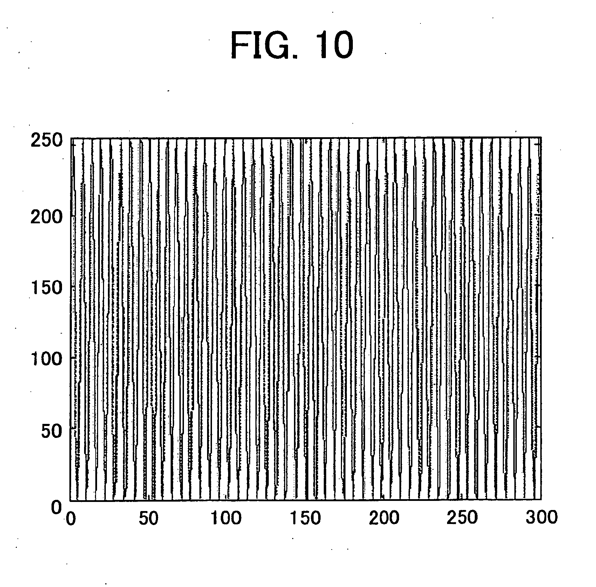

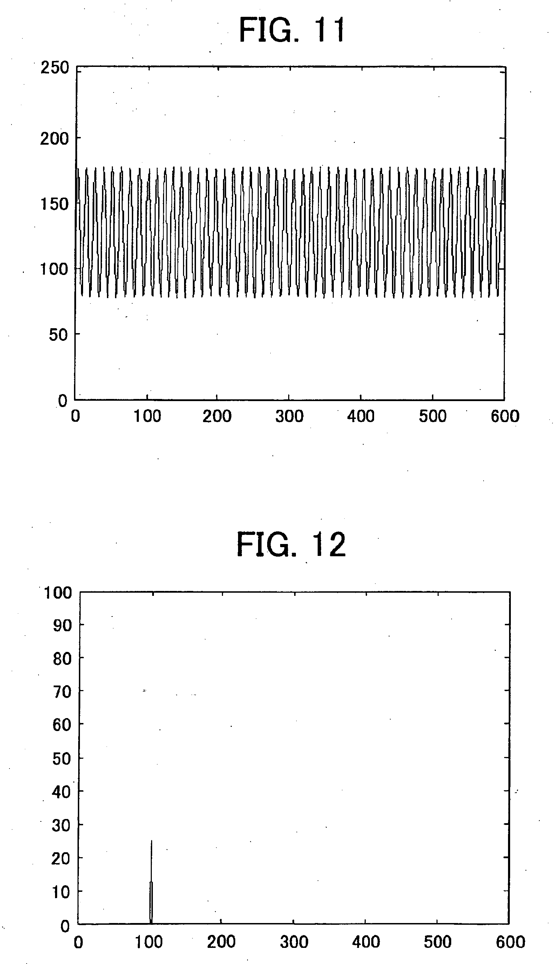

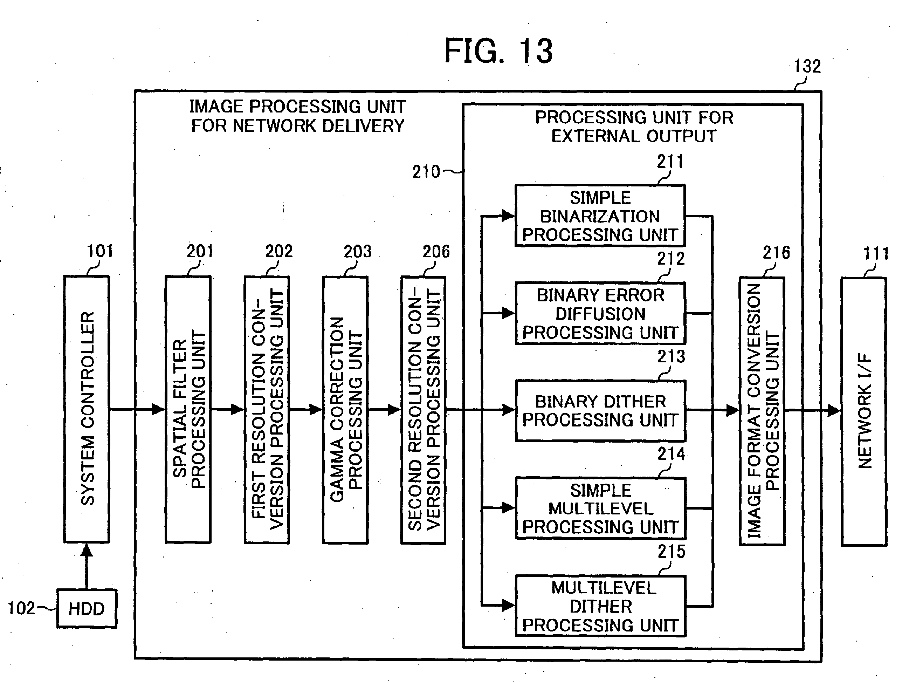

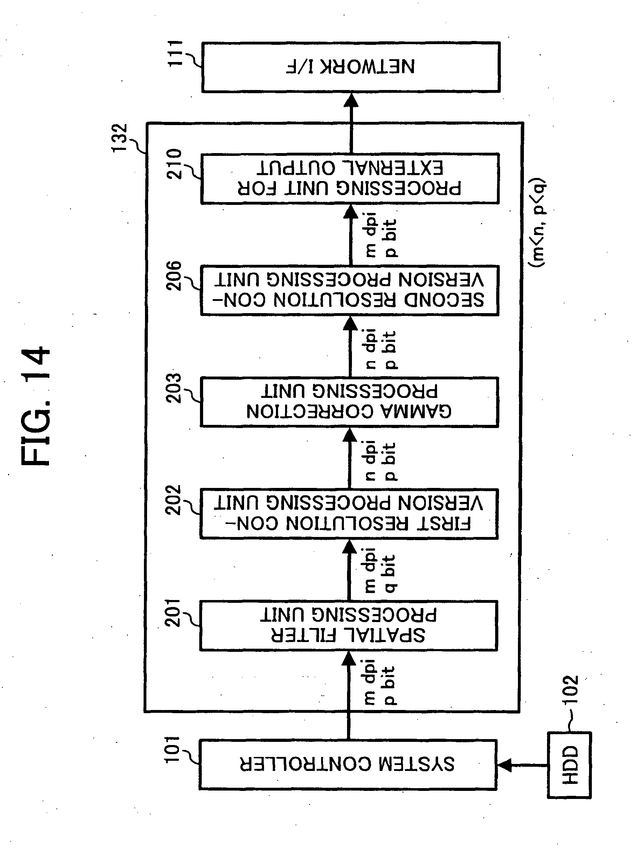

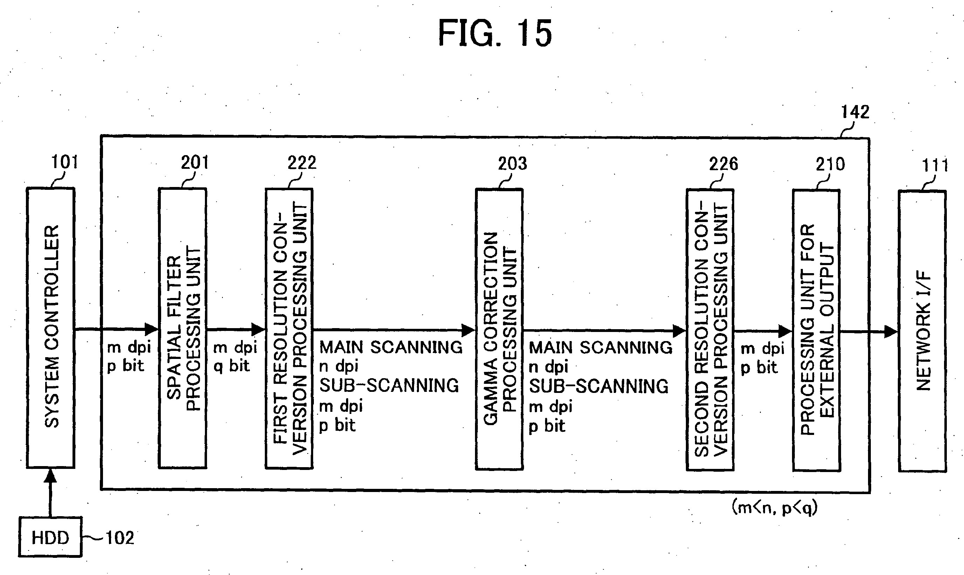

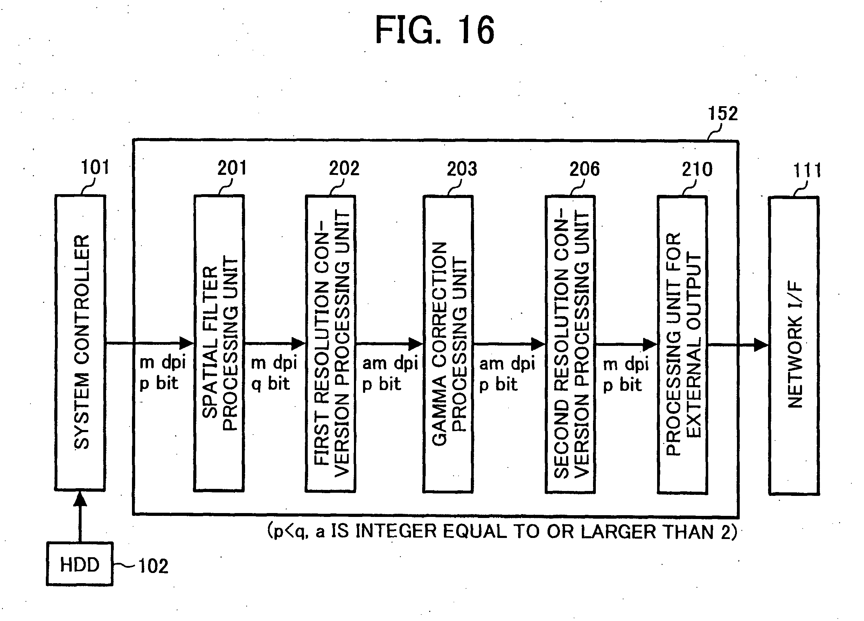

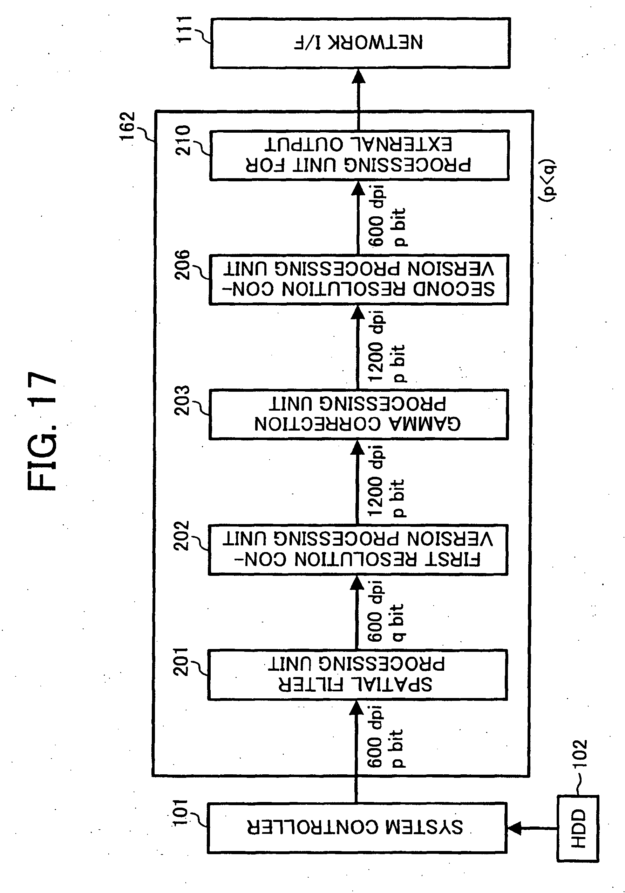

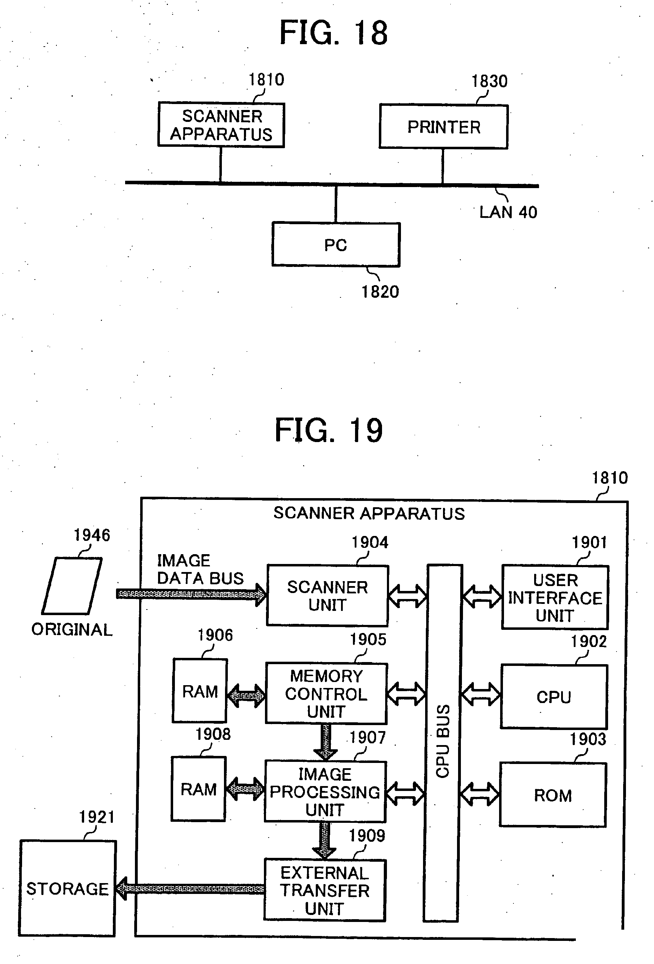

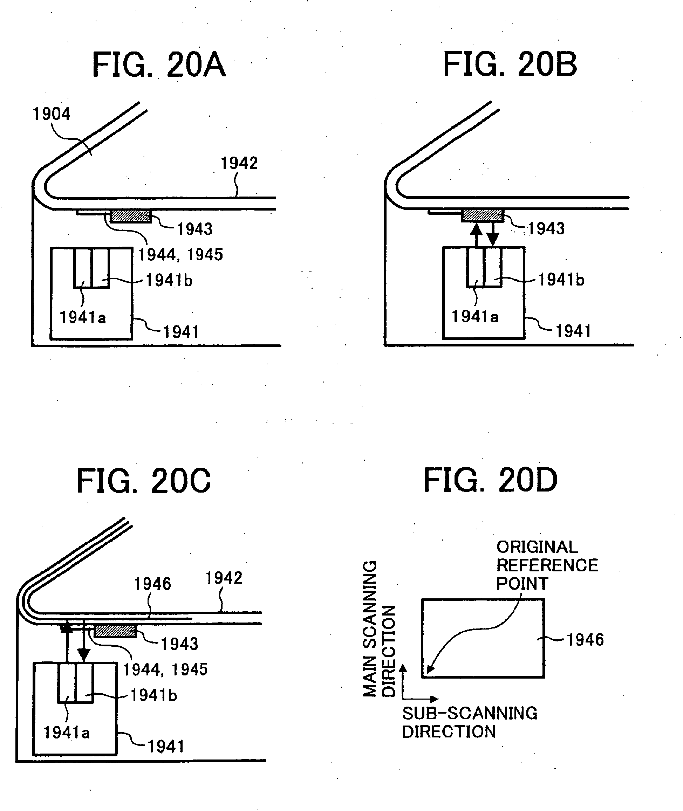

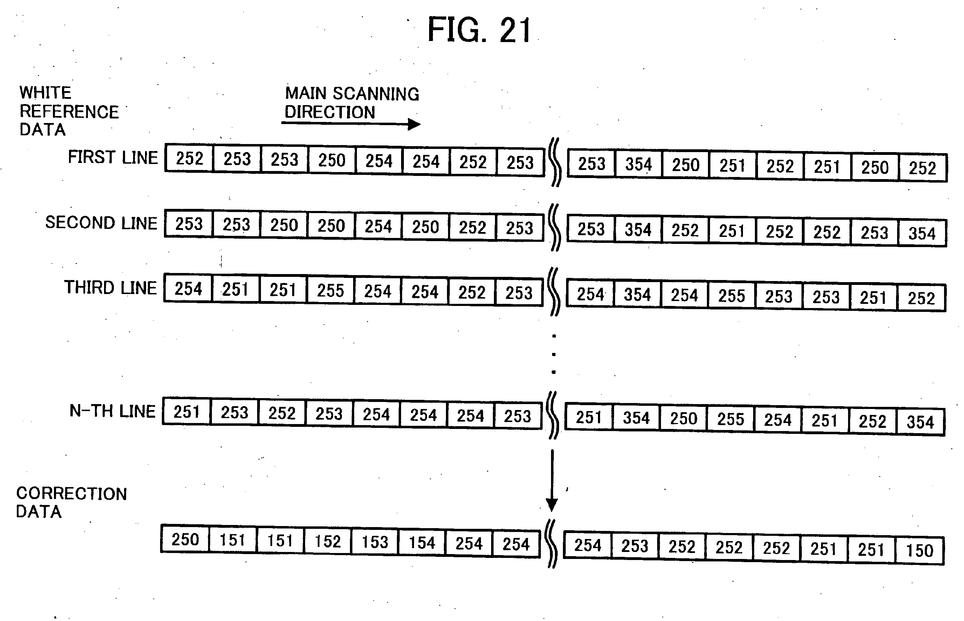

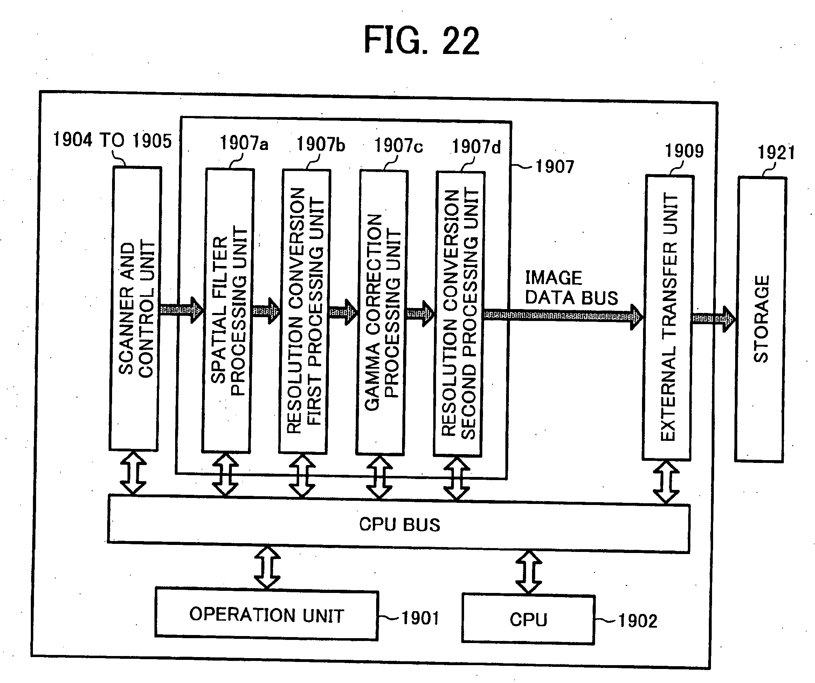

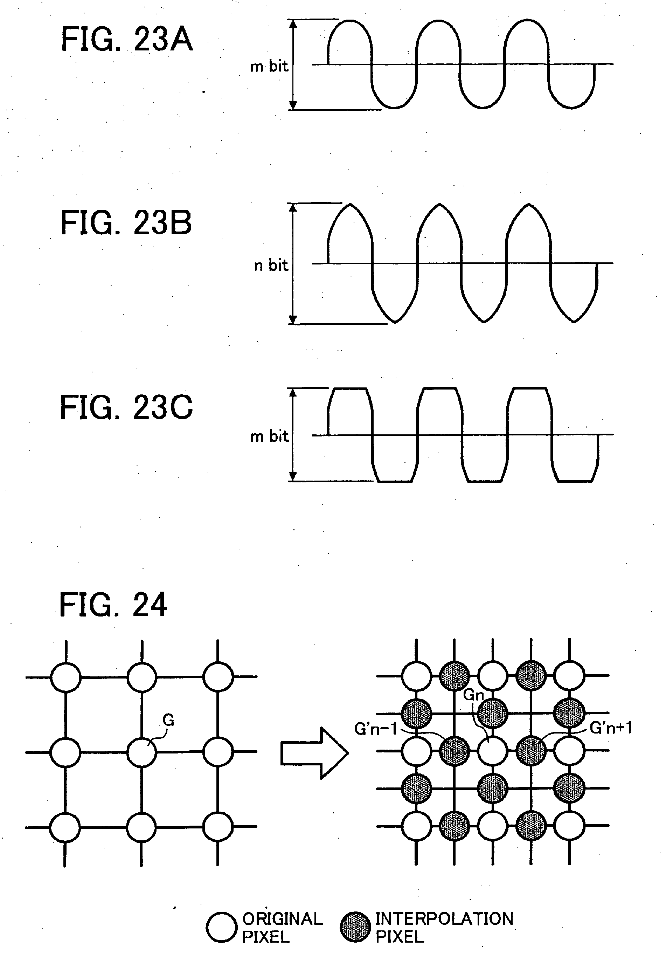

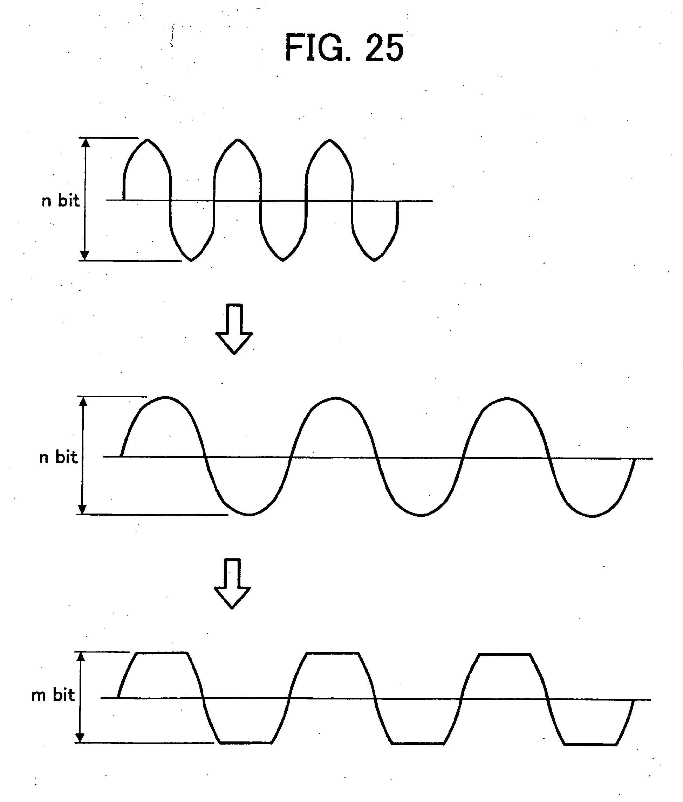

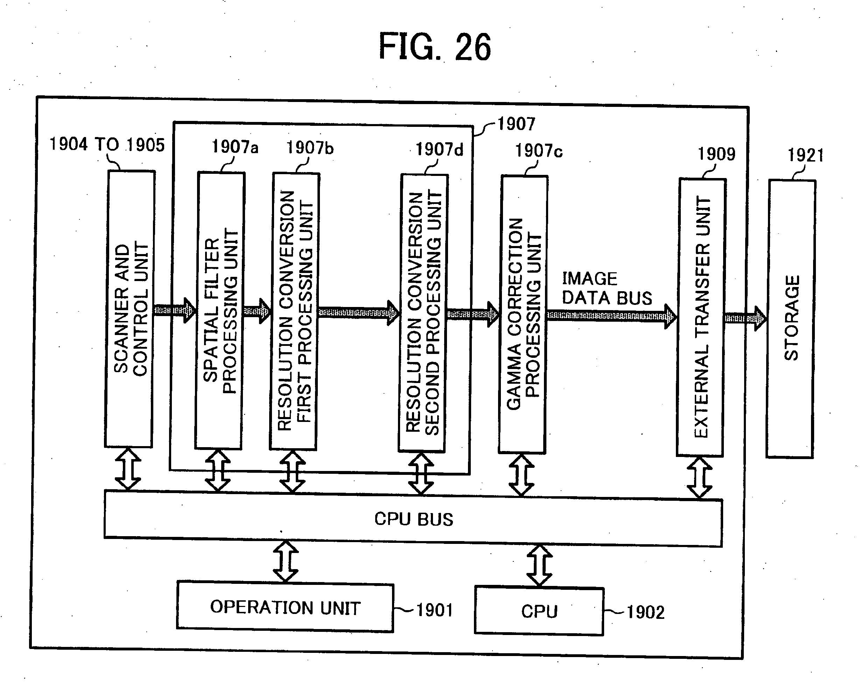

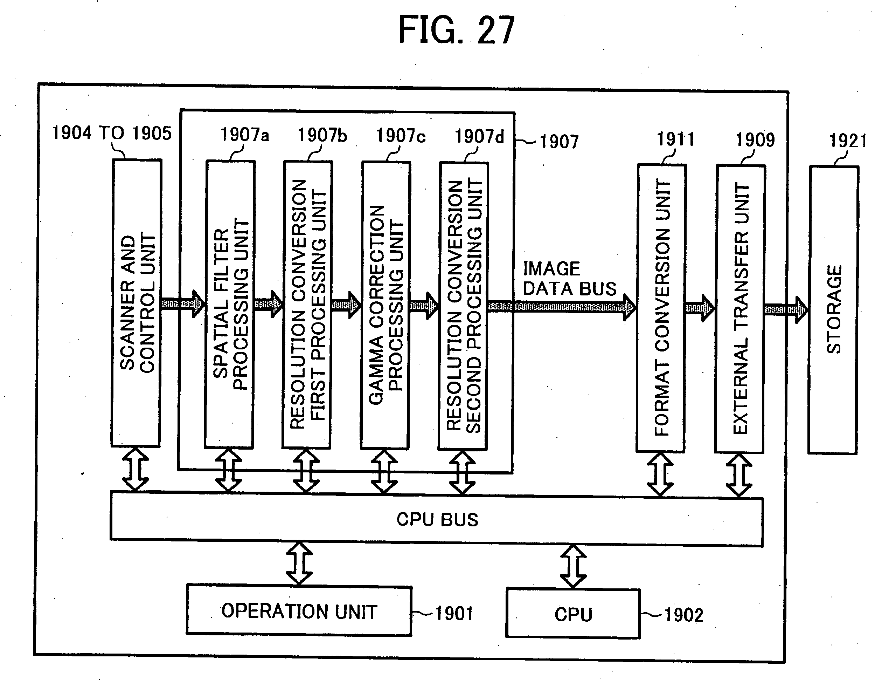

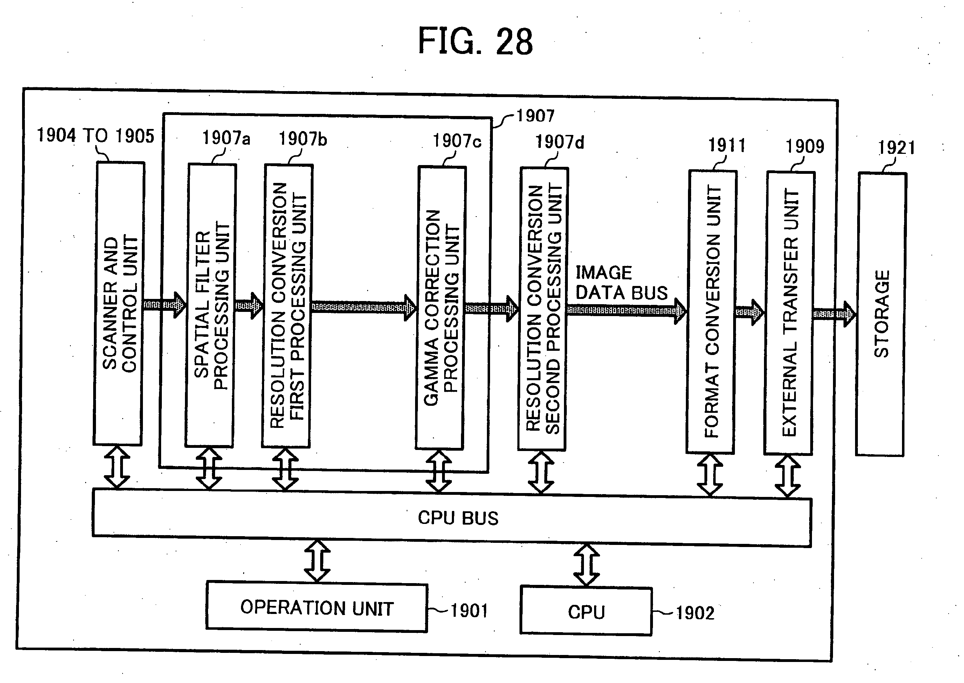

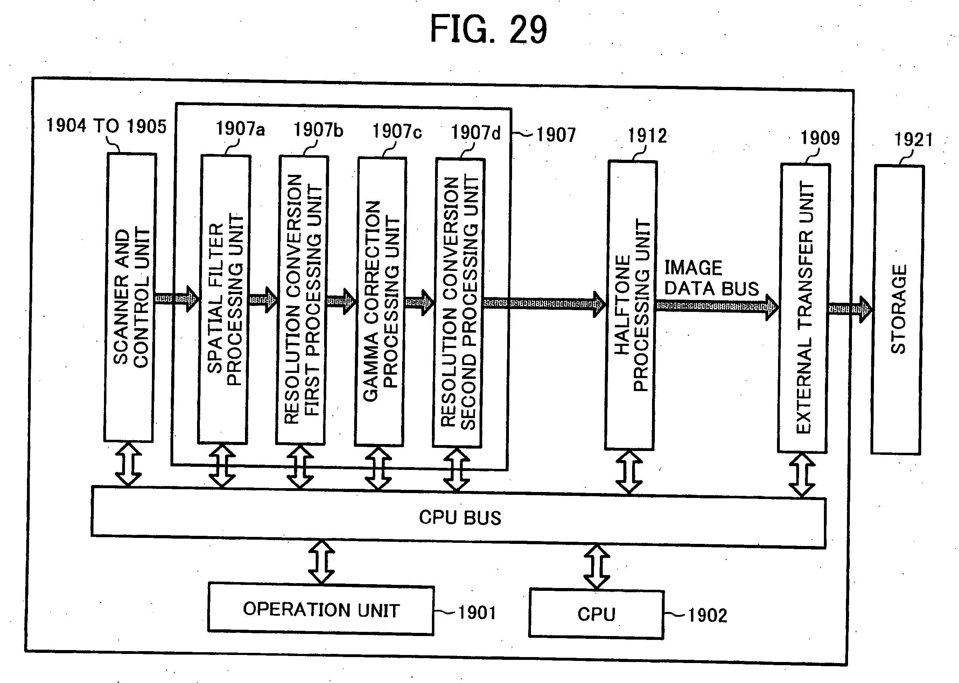

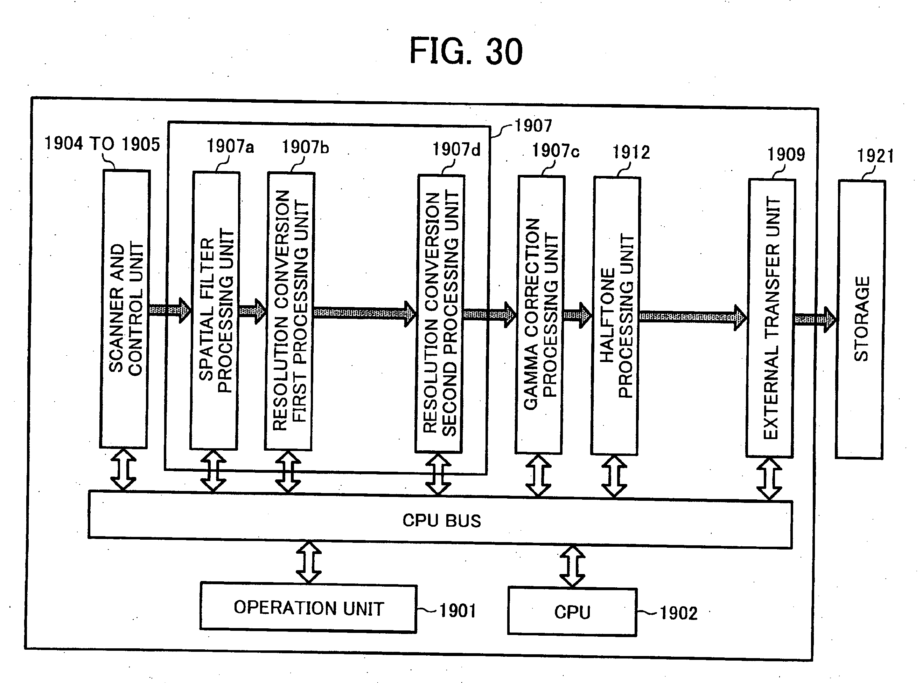

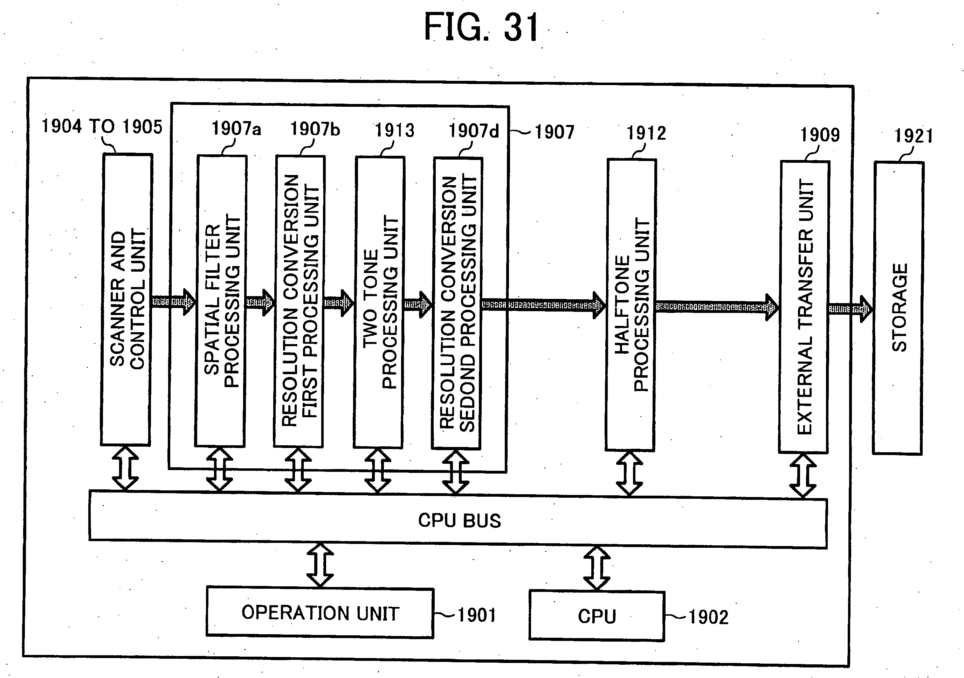

Fig. 1 is a block diagram showing a constitution of parts relating to image processing for network delivery in an image processing system of a first embodiment of the present invention. Fig. 2 is a diagram for explaining a resolution and a dynamic range of image data in the image processing for network delivery in the image processing system of the first embodiment. Fig. 3 is a block diagram showing an overall structure of the image processing system of the first embodiment. Fig. 4 is a diagram showing an example of image data to be an object of the image processing for network delivery in the image processing system of the first embodiment. Fig. 5 is a diagram showing an example of a result obtained by applying conventional MTF correction to the image data. Fig. 6 is a diagram showing an example of a result obtained by applying MTF correction in image processing. Fig. 7 is a diagram showing a result obtained by subjecting the image data shown in Fig. 6 to frequency analysis. Fig. 8 is a block diagram showing a constitution of parts relating to image processing for network delivery in an image processing system of a second embodiment of the present invention. Fig. 9 is a diagram for explaining a resolution and a dynamic range of image data in the image processing for network delivery of the image processing system of the second embodiment. Fig. 10 is a diagram showing an example different from Fig. 5 of a result obtained by applying the conventional MTF correction to the image data shown in Fig. 4. Fig. 11 is a diagram showing an example of a result obtained by applying resolution conversion processing for converting a resolution into a high resolution to the image data shown in Fig. 4 to be an object of the image processing for network delivery in the image processing system of the second embodiment. Fig. 12 is a diagram showing a result obtained by subjecting the image data shown in Fig. 11 to frequency analysis. Fig. 13 is a block diagram showing a constitution of parts relating to image processing for network delivery in an image processing system of a third embodiment of the present invention. Fig. 14 is a diagram for explaining a resolution and a dynamic range of image data in the image processing for network delivery in the image processing system of the third embodiment. Fig. 15 is a diagram corresponding to Fig. 14 for explaining image processing in which a first modification is applied to the image processing system of the third embodiment. Fig. 16 is a diagram for explaining image processing in which a second modification is applied to the image processing system of the third embodiment. Fig. 17 is a diagram for explaining image processing in which a third modification is applied to the image processing system of the third embodiment. Fig. 18 is a diagram showing as an example a connection form of a scanner apparatus, a printer, and a PC on an electric communication line. Fig. 19 is an electric block diagram of a scanner unit according to an example. Figs. 20A to 20D are diagrams for explaining part sections of the scanner unit according to the example. Fig. 21 is a diagram explaining correction data that is generated based on white reference data. Fig. 22 is a block diagram for explaining main sections of a scanner apparatus. Figs. 23A to 23C are for explaining wave changes before spatial filter processing and after the processing. Fig. 24 is a pixel array diagram for explaining resolution conversion. Fig. 25 is a diagram showing wave changes by the resolution conversion. Fig. 26 is a main part block diagram of a scanner apparatus. Fig. 27 is a main part block diagram of a scanner apparatus. Fig. 28 is a main part block diagram of a scanner apparatus. Fig. 29 is a main part block diagram of a scanner apparatus. Fig. 30 is a main part block diagram of a scanner apparatus. Fig. 31 is a main part block diagram of a scanner apparatus. Fig. 32 is a block diagram showing a structure of a conventional digital multifunction product.

### BEST MODE FOR CARRYING OUT THE INVENTION

Exemplary embodiments of an image data processing apparatus, an image data processing method, a program, a recording medium, and an image reading apparatus according to the present invention will be hereinafter explained in detail with reference to the attached drawings.

### First embodiment.

First, an image processing system, which is a first embodiment of the image data processing apparatus of the invention, and an embodiment of an image processing method of the invention using the image processing system will be explained using Figs. 1 to 7. Fig. 1 is a block diagram showing a constitution of parts relating to image processing for network delivery in the image processing system of this embodiment, Fig. 2 is a diagram for explaining a resolution and a dynamic range of image data in the image processing for network delivery in the image processing system, Fig. 3 is a block diagram showing an overall structure of the image processing system, Fig. 4 is a diagram showing an example of image data to be an object of the image processing for network delivery in the image processing system, Fig. 5 is a diagram showing an example of a result obtained by applying conventional MTF correction to the image data, Fig. 6 is also a diagram showing an example of a result obtained by applying MTF correction in image processing according to the invention, and Fig. 7 is a diagram showing a result obtained by subjecting the image data shown in Fig. 6 to frequency analysis.

As shown in Fig. 3, an image processing system 100 of this embodiment includes a system controller 101, a hard disk drive (HDD) 102, a copy apparatus 104, a network interface (I/F) 111, and an image processing unit for network delivery 112.

The system controller 101 is control means that controls this image processing system 100. The system controller 101 includes a CPU, a ROM, a RAM, and the like. The system coritroller 101 performs control like operation control for the copy apparatus 104, transfer of image data in the image processing system 100, storage and read-out of image data in and from the HDD 102, image processing in the image processing unit for network delivery 112, and exchange of information with an external apparatus via the network I/F 111.

The HDD 102 is image data storing means that stores image data. The HDD 102 mainly performs storage of image data read by a scanner apparatus 106 of a copy engine unit 105. Besides, the HDD 102 may store image data received from an external apparatus via the network I/F 111., setting information necessary for control of this image processing system 100, and the like.

The copy apparatus 104 is a self-contained copy apparatus and includes the copy engine unit 105, a copy controller 109, and an operation panel 110. The copy engine unit 105 includes a scanner apparatus 106 serving as image reading means that reads an image of an original at a predetermined resolution and outputs image data, an image processing unit (IPU) 107 that applies various image processing for changing image data to image data suitable for image formation by a printer apparatus 108 to the image data read by the scanner apparatus 106 or image data to be inputted from the system controller 101, and a printer apparatus 108 serving as image forming means that forms an image on a sheet based on image data to be inputted from the image processing unit 107.

The copy controller 109 is control means that controls an operation of the copy apparatus 104. The copy controller 109 performs control for operations of the copy engine unit 105 and the operation panel 110 and control for data input/output to and from the operation panel 110. More specifically, for example, the copy controller 109 confirms a structure of the copy engine unit 105 to judge what kind of options are attached, confirms states of respective portions of the scanner apparatus 106 and the printer apparatus 108, starts up operations of these apparatuses, confirms a state of progress of a process, and confirms the state in detail at the time when an error has occurred.

The operation panel 110 is a unit that includes a display unit in a form of a liquid crystal display of, for example, 400x640 dots and a touch panel of 16x16 area divisions and uses functions of the display unit and the touch panel to accept setting for respective functions while interacting with a user and display necessary various status messages.

The copy apparatus 104 and the system controller 101 are connected by a video interface 113 for transferring image data read by the scanner apparatus 106 and image data to be formed as an image and outputted by the printer apparatus 108 and a command/response interface 114 for instructing operations of the scanner apparatus 106 and the printer apparatus 108, confirming states of the apparatuses, and communicating with the operation panel 110.

The network I/F 111 is an interface that connects this image processing system 100 to a network 120 like a local area network (LAN), and the system controller 101 exchange data with an external apparatus connected to the network 120 via this network I/F 111. The network I/F 111 functions as transmission means, which sends image data after the processing by the image processing unit for network delivery 112 to the external apparatus, in conjunction with the system controller 101 that controls exchange of data.

The image processing unit for network delivery 112 is image processing means that performs required image processing when the system controller 101 sends image data stored in the HDD 102 to the external apparatus connected to the network 120. The structure of this image processing unit for network delivery 112 and image processing to be performed in this unit are main characteristics of the invention. This point will be described in detail later.

Such an image processing system 100 can copy an original read by the scanner apparatus 106 and store image data thereof in the HDD 102, and in response to a request from an external apparatus connected to the network 120, apply predetermined image processing to the image data stored in the HDD 102 and send the image data to the external apparatus or another external apparatus. Here, an outline of this operation will be explained.

When execution of copying is instructed from the operation panel 110, the scanner apparatus 106 scans an original to read an image thereof and outputs image data to the image processing unit 107. This image data is monochrome image data or color RGB image data depending upon a function or a reading mode of the scanner apparatus 106.

The image processing unit 107 applies predetermined image processing to the image data inputted from the scanner apparatus 106 and converts the image data into image data suitable for image formation by the printer apparatus 108. Then, the image processing unit 107 sends this image data to the system controller 101 once, and the system controller 101 stores the image data in the HDD 102. In this case, to effectively utilize a storage area of the HDD 102 and reduce a load of data transfer, the system controller 101 applies predetermined compression processing to the image data in the system controller 101 and then stores the image data in the HDD 102.

Thereafter, the system controller 101 transfers this image data to the image processing unit 107 again, generates a drive signal for the printer apparatus 108 from this image data the image processing unit 107, and drives the printer apparatus 108 with the drive signal to cause the printer apparatus 108 to form an image on a sheet. With the above processing, the system controller 101 executes copying and stores the read image data in the HDD 102.

On the other hand, a user can access this image processing system 100 from the external apparatus connected thereto via the network 120, search through the image data stored in the HDD 102, and instruct transfer of desired image data. When the system controller 101 receives this instruction, the system controller 101 selects the image data and reads out the image data from the HDD 102. Since the image data is stored in the HDD 102 in a compressed state, the system controller 101 performs expansion processing to bring back the image data to the original image data, applies required image processing to the image data in the image processing unit for network delivery 112, and sends the image data to a transmission destination instructed via the network I/F 111.

Next, a structure of the image processing unit for network delivery 112 will be explained.

As shown in Figs. 1 and 2, the image processing unit for network delivery 112 includes a spatial filter processing unit 201, a resolution conversion processing unit 202, a gamma correction processing unit 203, and a processing unit for external output 210.

The spatial filter processing unit 201 is spatial filter processing means that applies spatial filter processing, in which a dynamic range for output is set wider than a dynamic range for input, to image data to be read out from the HDD 102 and inputted by the system controller 101. The spatial filter processing unit 201 applies spatial filter processing, which does not change a resolution and performs output at a dynamic range of q bits, to image data with a resolution of m dpi (dot per inch) and a dynamic range of p bits (p<q). For example, m, p, and q can be set to 600, 8, and 10, respectively.

Contents of the processing are MTF correction, which emphasizes edge information of a character part and a picture part of an image, like Laplacian coping with a 3x3 pixel matrix and smoothing processing for controlling moiré that occurs in a halftone dot original. The MTF correction processing and the smoothing processing are selectively performed when image data is data of a character image and when image data is data of a photograph image, respectively.

The resolution conversion processing unit 202 is resolution increase processing means that applies resolution conversion processing for converting a resolution into a resolution higher than a resolution of present image data to the image data after the processing by the spatial filter processing unit 201. The resolution conversion processing unit 202 applies resolution conversion processing for increasing a resolution to n dpi and bringing back a dynamic range to p bit to image data with a resolution of m dpi (m<n) and a dynamic range of q bits. This resolution conversion processing can be performed by interpolation using, for example, an interpolation method or a tertiary function convolution method, and n can be set to, for example, 1200.

The gamma correction processing unit 203 is gamma correction means that applies gamma correction processing to the image data after the processing by the resolution conversion processing unit 202. This processing is image data correction for matching a reading characteristic in the scanner apparatus 106 and an image output characteristic in an apparatus in a transmission destination of the image data. This is basically processing for causing an apparatus in an output destination to output the same image as a read original but includes processing for applying concentration correction, which facilitates character detection when output image data is used to cause an OCR (Optical Character Reader) to perform character recognition, and the like.

The processing unit for external output 210 includes a simple binarization processing unit 211, a binary error diffusion processing unit 212, a binary dither processing unit 213, a simple multilevel processing unit 214, a multilevel dither processing u nit 215, and an image format conversion processing unit 216, and performs processing for converting the image data after the processing by the gamma correction processing unit 203 into a predetermined format.

First, this processing unit for external output 210 selects any one of simple binarization processing, binary error diffusion processing, binary dither processing, simple multilevel processing, and multilevel dither processing so as to meet a purpose of use of image data according to selection by the user, an instruction from the output destination apparatus, or the like, and applies the processing to the image data after the processing by the gamma correction processing unit 203. Consequently, the processing unit for external output 210 can increase a compression effect for data and makes it possible to output an image of the same characteristic as the image, which is copied and outputted in the image processing system 100, in an external apparatus as well. Means for performing the respective pieces of processing is the five processing means from the simple binarization processing unit 211 to the multilevel dither processing unit 215.

The simple binarization processing unit 211 is means that applies the simple binarization processing with a predetermined value as a threshold value to multilevel image data to be inputted and converts the image data into binary image data. It is advisable to apply the simple binarization processing with this simple binarization processing unit 211 to image data at the time when it is desired to use the image data in character recognition using an OCR or the like, image data read in a character mode at the time of copying, and the like. In this way, since the character recognition by the OCR is facilitated and multilevel data can be binarized and handled, an amount of data can be reduced. Since a compression ratio for image data at the time when the image data is converted into a general-purpose format can be improved, an amount of data can be further reduced.

The binary error diffusion processing unit 212 and the binary dither processing unit 213 are means that apply halftone processing like error diffusion processing or dither processing to multilevel data and convert the multilevel data into binary image data. If this processing is performed, image data can be extracted while a tone characteristic of a picture part or the like of an original is maintained. In addition, since the multilevel data is converted into the binary data, an amount of data can be reduced. Further, for example, when image data is outputted to a binary printer to cause the binary printer to perform image formation, these pieces of processing are effective. This is because the halftone processing is performed, and an output substantially equivalent to an original, which is read at the time of storage in the HDD 102, can be obtained.

The simple multilevel processing unit 214 is mean that outputs multilevel image data without change. The multilevel dither processing unit 215 is means that performs the dither processing as the halftone processing to make an output multilevel. Since a tone characteristic of original image data can be maintained in these pieces of processing, these pieces of processing are effective, for example, when image data is outputted to a multilevel printer to cause the multilevel printer to perform image formation.

After any one of these pieces of processing is applied to image data, if necessary, the image data is converted into a general-purpose format of a form, which can be inspected in an external apparatus, like TIFF (Tagged Image File Format) or JPEG (Joint Photographic Expert Group) by the image format conversion processing unit 216 serving as format converting means. In this way, the image data stored in the HDD 102 can be easily inspected and edited in an external terminal like a PC (personal computer) or the like. Note that a format to be used is set appropriately according to selection by a user, an instruction form an output destination apparatus, or the like. When the conversion into the general-purpose format is unnecessary, for example, when image data is outputted to a printer to cause the printer to perform image formation, the conversion is not performed.

The image data after the processing by the image format conversion processing unit 216 is sent to the network I/F 111, and sent to the external apparatus from the network I/F 111 via the network 120.

Next, image processing in the image processing unit for network delivery 112 will be explained.

When the system controller 101 receives an instruction to transfer image data to an external apparatus, the system controller 101 selects.and reads out the image data from the HDD 102. Then, since the image data is stored in the HDD 102 in a compressed state, the system controller 101 performs expansion processing to restore the image data to original image data.

Thereafter, to apply image processing to the restored image data, the system controller 101 inputs the image data in the spatial filter processing unit 201 of the image processing unit for network delivery 112. Here, it is assumed that the image data is data of a photograph image as shown in Fig. 4 with a resolution of 600 dpi and eight bits per one pixel (m=600, p=8). This data is equivalent to data obtained by sampling a periodical image like a halftone dot at an equal interval. Although image reading may be performed two-dimensionally actually, the data is shown one-dimensionally for ease of explanation. In Fig. 4, a horizontal axis indicates a pixel number and a vertical axis indicates a data value in the pixel. This holds true in a diagram showing contents of image data to be described below.

The spatial filer processing unit 201 applies spatial filter processing (here, MTF processing) to this image data.

Here, an input is data of eight bits per one pixel with a dynamic range from 0 to 255 for each pixel. However, when it is assumed that an output is also eight bits per one pixel as in the past, the output has to be 0 or 255 even if a result obtained by applying an arithmetic operation of MTF correction to the input data is below 0 or over 255, and saturation occurs. In this case, the image data changes, for example, as shown in Fig. 5 as a result of the MTF correction. Such image data contains a higher harmonic wave, which causes occurrence of moiré at the time when image formation or display is performed.

Thus, here, an output of the spatial filter processing unit 201 is set as data with the number of bits larger than that of an input. For example, if it is assumed that the output is ten bits per one pixel (q=10), a dynamic range can be set to -512 to +511 to secure a dynamic range wider than that of the input. In this way, it is possible to make it less likely that saturation due to the MTF correction processing occurs. For example, a result obtained by applying the MTF correction processing for an output of ten bits to the image data of Fig. 4 is as shown in Fig. 6. Neither saturation nor a higher harmonic wave due to the saturation has occurred.

Note that a dynamic range may be set, for example, from 0 to +1023 or from -256 to +767 as long as saturation does not occur

The resolution conversion processing unit 202 applies the resolution conversion processing for converting a resolution into a high resolution to the image data after the processing by the spatial filter processing unit 201. Then, in this resolution conversion processing, a dynamic range is brought back to a value at the time of input from the system controller 101. Here, it is assume that the image data is converted into data with a resolution of 1200 dpi (n=1200) and eight bits per one pixel.

In this processing, after converting a resolution of inputted image data with m=600 dpi and q=10 bits into n=1200 and q=10 bits, saturation processing is performed at 0 and 255 to lower the dynamic range to p=8 bits. Since moire does not occur easily in image data with a high resolution, if the saturation processing is performed after the resolution conversion is performed in this way, occurrence of moiré can be reduced more compared with the time when the saturation processing is performed in a state of a low resolution.

A result obtained by applying frequency analysis to the data, which is obtained by applying the resolution conversion processing to the image data after the MTF correction processing shown in Fig. 6, is shown in Fig. 7. In Fig. 7, a horizontal axis indicates a frequency (Ipi: line per inch) and a vertical axis indicates a relative intensity. As shown in Fig. 7, high frequency components with 300 Ipi or more are fewer than components near 100 Ipi. If a percentage of high-frequency components is in this order, moiré is hardly recognized. The gamma correction processing unit 203 applies gamma correction processing to the image data after the processing by the resolution conversion processing unit 202. Since this gamma correction is applied to image data for which a resolution is increased by the resolution conversion processing unit 202, moiré hardly occurs even in steep gamma correction.

The image data after the gamma correction processing is subjected to any one of the simple binarization processing, the binary error diffusion processing, the binary dither processing, the simple multilevel processing, and the multilevel dither processing as described above in the processing unit for external output 210 and, if necessary, converted into the general-purpose format such as the TIFF or the JPEG, and then sent to the network I/F 111 and sent.to the external apparatus from the network I/F 111 via the network 120.

By performing such image processing in the image processing unit for network delivery 112 constituted as described above, occurrence of moiré at the time when image data is reproduced as an image in an external apparatus in a transmission destination can be reduced. In addition, in this case, since smoothing processing is not applied to data of a character image and steep gamma correction is also possible, sharpness of the image can be maintained.

Note that, here, the respective processing units constituting the image processing unit for network delivery 112 are constituted by dedicated hardware to realize speed-up of processing. However, these processing units may be constituted by programmable processors to improve versatility, or the CPU of the system controller 101 or a CPU provided separately from the system controller 101 may be caused to execute a predetermined control program to thereby play the functions of the respective processing units and the transmission means.

In this case, this control program only has to be stored in the ROM or the like provided in the system controller 101 from the beginning, but can also be recorded in a memory like a separate ROM serving as a recording medium and provided. In addition, naturally, it is also possible to record the control program in another nonvolatile recording medium (memory) like an SRAM, an EEPROM, or a memory card and provide the control program. If the memory storing this control program is rewritable nonvolatile storing means, update of a program corresponding to an advance of a technology becomes easy. Moreover, it is also possible to download the control program from an external apparatus, which is connected to the network 120 and includes a recording medium having recorded therein programs, and execute the control program. This holds true for respective embodiments and modifications to be described below.

When the above-mentioned image processing is performed, before inputting image data in the image processing unit for network delivery 112, a resolution of image data and an image size may be converted by the system controller 101. Since the above-mentioned image processing is performed after such processing, even if moiré is caused by conversion processing for a resolution and an image size, an influence of the moiré can be reduced by the image processing. Decline in an image quality can be prevented even if conversion of a resolution and an image size is performed by simple processing such as simple thinning-out.

### Second embodiment

Next, an image processing system, which is a second embodiment of the image data processing apparatus of the invention, and an embodiment of an image processing method of the invention using the image processing system will be explained using Figs. 8 to 12. Fig. 8 is a block diagram showing a constitution of parts relating to image processing for network delivery in the image processing system of this embodiment, Fig. 9 is a diagram for explaining a resolution and a dynamic range of image data in the image processing for network delivery of the image processing system, Fig. 10 is a diagram showing an example of a result obtained by applying the conventional MTF correction to the image data shown in Fig. 4 to be an object of the image processing for network delivery in the image processing system, Fig. 11 is also a diagram showing an example of a result obtained by applying resolution conversion processing for converting a resolution into a high resolution, and Fig. 12 is a diagram showing a result obtained by subjecting the image data shown in Fig. 11 to frequency analysis.

Since this image processing system is different from the image processing system of the first embodiment only in a structure of the image processing unit for network delivery 122, only this point will be explained.

As shown in Figs. 8 and 9, the image processing unit for network delivery 122 of this image processing system includes a first resolution conversion processing unit 204, a spatial filter processing unit 205, a gamma correction processing unit 203, a second resolution conversion processing unit 206, and a processing unit for external output 210.

The first resolution conversion processing unit 204 is resolution increasing processing means that applies resolution conversion processing for converting a present resolution into a resolution higher than the present resolution of image data to image data to be read out from the HDD 102 and inputted by the system controller 101. The first resolution conversion processing unit 204 applies resolution conversion processing for increasing a resolution to n dpi to image data with a resolution of m dpi (m<n) and a dynamic range of p bits. This resolution conversion processing can be performed by interpolation using, for example, an interpolation method or a tertiary function convolution method, and for example, m, p, and n can be set to 600, 8, and 1200, respectively.

The spatial filter processing unit 205 is spatial filter processing means that applies spatial filter processing to the image data after the processing by the first resolution conversion processing unit 204. The spatial filter processing unit 205 applies the spatial filter processing to image data with a resolution of n dpi and a dynamic range of p bits while keeping the resolution and the dynamic range. The spatial filter processing 205 is the same as that in the first embodiment in that the MTF correction processing and the smoothing processing are selectively performed according to contents of image data.

The gamma correction processing unit 203 is a gamma correction means that is the same as the gamma correction means in as the first embodiment except that the gamma correction processing unit 203 applies the gamma correction processing to the image data after the processing by the spatial filter processing unit 205.

The second resolution conversion processing unit 206 is resolution reduction processing means that applies resolution conversion processing for converting a resolution into a resolution lower than a resolution of image data after processing to the image data after the processing by the gamma correction processing unit 203. The second resolution conversion processing unit 206 applies resolution conversion processing for reducing a resolution to m dpi before the processing by the first resolution conversion processing unit 204 to image data with a resolution of n dpi and a dynamic range of p bits. This resolution conversion processing can be performed by, for example, a smoothing filter, which blocks a high-frequency component of 300 Ipi or more, and down-sampling by thinning-cut.

The processing unit for external output 210 is the same as that in the first embodiment.

Next, image processing in the image processing unit for network delivery 122 of this image processing system will be explained.

In this embodiment, when the system controller 101 receives an instruction to transfer image data to an external apparatus, the system controller 101 also inputs the instruction in the first conversion processing unit 204 of the image processing unit for network delivery 122 to select and read out the image data from the HDD 102, perform expansion processing, and perform image processing. Here, it is assumed that the image data is the data of the photograph image as shown in Fig. 4 with a resolution of 600 dpi and eight bits per one pixel (m=600, p=8) as in the case of the first embodiment.

When the normal MTF correction is applied to such image data as in the past, a result is, for example, as shown in Fig. 10, and a part of the image data saturates to 0 or 255 by enhancement processing. This is observed as moiré in an image.

On the other hand, in this image processing system, first, resolution conversion processing for converting a resolution into a high resolution is performed by the first resolution conversion processing unit. Here, it is assumed that image data is converted into data with a resolution of 1200 dpi (n=1200) and eight bits per one pixel. In other words, the image data is converted into image data with a double resolution. In addition, a dynamic range is not changed.

The image data obtained by applying the resolution conversion processing to the input image data shown in Fig. 4 is as shown in Fig. 11. A result obtained by applying frequency analysis to this image data is shown in Fig. 12. In Fig. 12, a horizontal axis indicates a frequency (Ipi) and a vertical axis indicates a relative intensity. As shown in Fig. 12, a high-frequency component of 300 Ipi or more has not occurred at this point, and moiré is not recognized.

The spatial filter processing unit 205 applies the spatial filter processing (here, MTF correction) to the image data after the processing by the first resolution conversion processing unit 204.

Here, unlike the first embodiment, both dynamic ranges of an input and an output are p=8 bits. Therefore, the output has to be 0 or 255 even if a result obtained by applying an arithmetic operation of MTF correction to input data is below 0 or over 255, and saturation occurs. However, since a resolution is set high, saturation does not occur much, and since high-frequency components caused by the saturation is few, moiré rarely occurs. Note that, although not shown in the figure, a result obtained by subjecting the image data after this spatial filter processing is substantially the same as the case in which analysis is applied to the image data after the processing in the resolution conversion processing unit 202 of the first embodiment (shown in Fig. 7).

The spatial filter processing unit 205 applies the gamma correction processing to the image data after the processing. Since this gamma correction is applied to image data, for which a resolution is increased, as in the case of the first embodiment, moiré hardly occurs even if the gamma correction is steep gamma correction.

The second resolution conversion processing unit 206 applies resolution conversion processing for converting a resolution into a low resolution to the image data after the processing by the gamma correction processing unit 203. Here, inputted image data of n=1200 dpi is converted into image data of m=600 dpi. A dynamic range is p=8 bits for both an input and an output.

This resolution conversion is performed by a smoothing filter, which blocks a high-frequency component of 300 Ipi or more, and down-sampling by thinning-out. A high-frequency component caused by spatial filter processing and gamma processing can be removed by this processing to prevent moiré more effectively.

The image data after the resolution conversion processing by the second resolution conversion processing unit 206 is subjected to required processing as in the case of the first embodiment in the processing unit for external output 210, and then sent to the network I/F 111 and sent to the external apparatus from the network I/F 111 via the network 120.

By performing such image processing in the image processing unit for network delivery 122 constituted as described above, occurrence of moiré at the time when image data is reproduced as an image in an external apparatus in a transmission destination can be reduced. In addition, since steep gamma correction is possible in this case, sharpness of an image can also be maintained.

In particular, since occurrence of moiré can be prevented effectively by applying the spatial filter processing and the gamma processing to image data with a high resolution, and a high-frequency component causing moiré can be removed by resolution conversion processing for bringing back a resolution to an original resolution, a moiré prevention effect can be shown to the maximum. In the case of the above-mentioned example, even if image data is read by a reading apparatus with a relatively low resolution of about 600 dpi, an image of a quality of the same degree as in the case in which image data is read by a reading apparatus with a high resolution of about 1200 dpi can be obtained.

### Third embodiment

Next, an image processing system, which is a third embodiment of the image data processing apparatus of the invention, and an embodiment of an image processing method of the invention using the image processing system will be explained using Figs. 13 and 14. Fig. 13 is a block diagram showing a constitution of parts relating to image processing for network delivery in the image processing system of this embodiment. Fig. 14 is a diagram for explaining a resolution and a dynamic range of image data in the image processing for network delivery in the image processing system.

Since this image processing system is different from the image processing system of the first embodiment only in that the second resolution conversion processing unit 206 is provided between the gamma correction processing unit 203 and the processing unit for external output 210 in the image processing unit for network delivery 132, only this point will be explained. Note that, here, the resolution conversion processing unit 202 of the first embodiment is referred to as the first resolution conversion processing unit 202 to distinguish the resolution conversion processing unit 202 from the second resolution conversion processing unit 206.

The second resolution conversion processing unit 206 is the same resolution reduction processing means as the second resolution conversion processing unit 206 explained in the second embodiment. The second resolution conversion processing unit 206 applies resolution conversion processing for reducing a resolution to m dpi before the processing by the first resolution conversion processing unit 204 to image data with a resolution of n dpi and a dynamic range of p bits.

Further, in image processing in the image processing unit for network delivery 132 of this image processing system, the same resolution conversion processing for converting a density into a low density as in the case of the second embodiment is applied to the image data after the processing by the gamma correction processing unit 203. In addition, the image data after the resolution conversion processing by the second resolution conversion processing unit 206 is subjected to required processing in the processing unit for external output 210 as in the case of the first embodiment, and then sent to the network I/F 111 and sent to the external apparatus from the network I/F 111 via the network 120.

By performing such image processing in the image processing unit for network delivery 132 constituted as described above, occurrence of moiré at the time when image data is reproduced as an image in an external apparatus in a transmission destination can be reduced. In addition, since steep gamma correction is possible in this case, sharpness of an image can also be maintained.

In particular, since occurrence of moiré can be prevented effectively by applying the gamma processing to image data with a high resolution, and a high-frequency component causing moire can be removed at the time of resolution conversion processing for bringing back a resolution to an original resolution, a moiré prevention effect is large. In the case of the above-mentioned example, as in the case of the second embodiment, even if image data is read by a reading apparatus with a relatively low resolution of about 600 dpi; an image of a quality of the same degree as in the case in which image data is read by a reading apparatus with a high resolution of about 1200 dpi can be obtained.

Incidentally, this embodiment is different from the second embodiment in that spatial filter processing is performed in a state of low resolution and a dynamic range for output is set wider than a dynamic range for input. By performing the spatial filter processing at a low resolution, although the moiré reduction effect is slightly low compared the case of the second embodiment, since a high-frequency component can be removed in the second resolution conversion processing unit 206, this hardly causes a problem. On the other hand, since a coefficient matrix required for the spatial filter processing can be reduced in size, a memory capacity of the spatial filter processing unit can be reduced, and hardware components can be reduced.

### Modifications to the first to the third embodiments

Next, modifications to the respective embodiments will be explained using Figs. 15 to 17. Fig. 15 is a diagram corresponding to Fig. 14 for explaining image processing in which a first modification is applied to the image processing system of the third embodiment, Fig. 16 is a diagram for explaining image processing in which a second modification is applied, and Fig. 17 is a diagram for explaining image processing in which a third modification is applied.

First, as shown in Fig. 15, the first modification is adapted such that resolution conversion processing for increasing a resolution from m dpi to n dpi is performed only for a main scanning direction in a first resolution conversion processing unit 222. In the second resolution conversion processing unit 226, a resolution of n dpi is brought back to m dpi only for the main scanning direction and finally to a resolution before the processing by the first resolution conversion processing unit 222.

The main scanning direction is a direction to be a main scanning direction at the time when an image is read by the scanner apparatus 106 or a main scanning direction at the time when image formation is performed by the printer apparatus 108 based on image data, and is a direction in which pixels of data to be transferred as image data for one line during a line synchronization signal are arranged at the time of data transfer. Therefore, for example, when rotation processing is applied to an image, the main scanning direction may change from that at the time of reading the image.

The effect of moiré removal may be effective enough by performing resolution conversion only for one of a main scanning direction and a sub-scanning direction in this way. In this case, whereas buffers for plural lines are required to be provided in a resolution conversion processing unit to perform resolution conversion in the sub-scanning direction, a buffer for one line is sufficient in resolution conversion only for the main scanning direction. Thus, from the viewpoint of simplification of a circuit, it is more desirable to perform resolution conversion for the main scanning direction. However, resolution conversion may be performed only for the sub-scanning direction.

This constitution is particularly effective if resolution conversion is performed only for a direction in which an image is read at a low resolution when the scanner apparatus 106 performs reading at unequal resolutions like 600 dpi in the main scanning direction and 1200 dpi in the sub-scanning direction.

Next, as shown in Fig. 16, the second modification is adapted such that resolution conversion processing is performed to convert a resolution into a resolution multiplied by an integer equal to or larger than two in the first resolution conversion processing unit 202. "a" is assumed to be a magnification. In the second resolution conversion processing unit 206, a resolution of axm dpi is brought back to m dpi and finally to a resolution before the processing by the first resolution conversion processing unit 222.

Such resolution conversion processing for converting a resolution into a resolution multiplied by an integer can be performed by a combination of a zero value insertion and a smoothing filter, and resolution conversion for reducing a resolution to a resolution divided by an integer can be performed by a smoothing filter for performing band limitation and down sampling (thinning-out). Further, large-scale hardware like a magnification circuit for changing a magnification to an arbitrary magnification, and resolution conversion without distortion of an image can be performed by required minimum hardware. This makes it possible to establish an image processing system, which sends image data with less moiré, at low cost.

As shown in Fig. 17, the third modification is adapted such that, when a resolution of image data inputted to the image processing unit for network delivery 162 is set to 600 dpi, this resolution is converted into a resolution of 1200 dpi in the first resolution conversion processing unit 202. In the second resolution conversion processing unit 206, the resolution of 1200 dpi is brought back to 600 dpi and finally to a resolution before the processing by the first resolution conversion processing unit 202.

For reduction of moiré, it is preferable to read an image at a high resolution first. Then, the present general-purpose scanner with a resolution of 600 dpi is relatively inexpensive even if the scanner is high-speed. As to a printer; a printer that can form an image stably at the time of high-speed operation is a printer with a maximum resolution of about 600 dpi. Therefore, when the image processing system 100 is caused to perform a copy operation or image data is sent to an external printer to cause the external printer to perform image formation, it is preferable to set the image data to a resolution of 600 dpi.

Concerning resolution conversion to a high resolution that is performed for reduction of moiré, a high resolution is preferable. However, a data size increases as a resolution is increased, a memory of a large capacity for handling the data size is required, and a processing circuit is also complicated. Therefore, if the condition of "multiplied by an integer" explained in the second modification is also taken into account, conversion to 1200 dpi is appropriate.

Therefore, to show the effect of the invention to the maximum at low cost at the present technical level, the constitution of this modification is effective.

Note that the examples in which the respective modifications are applied to the third embodiment are explained here. However, it is needless to mention that the modifications can also be applied to the other embodiments.

The conversion processing for a resolution of image data and an image size by the system controller 101 explained in the first embodiment can also be applied to the other embodiments and the modifications.

It is needless to mention that the numerical value examples m, n, p, and q used in the respective embodiments are only examples, and other numerical values may be applied.

In the second and the third embodiments, the second resolution conversion processing unit 206 converts a resolution into a resolution before the processing in the first resolution conversion processing unit. However, depending upon a request from an apparatus in an output destination or a user, a resolution does not always have to be converted in this way but may be converted into a resolution different from the resolution before the processing.

Moreover, the image data processing apparatus of the invention is not limited to an image processing system that has a copying function but may be, for example, an image processing system that has a scanner apparatus for reading an original or an image processing system to which image data to be stored is inputted from an external apparatus.

Next, an exemplary scanner apparatus will be explained. Fig. 18 is a diagram showing as an example a scanner apparatus, a printer, and a PC (Personal Computer) that are connected on an electric communication line such as a LAN. In the figure, a scanner apparatus 1810, a PC 1820, and a printer 1830 are connected to a LAN 40. The scanner apparatus 1810 includes an electrical structure to be described later in Fig. 19 to thereby subject a read original image to image processing. For this purpose, the scanner apparatus 1810 includes a mechanical structure to be described later in Fig. 20 and reads an original image.

Fig. 19 is an electric block diagram of the scanner apparatus according to this example. In the figure, a user interface unit 1901 is an interface unit (operation unit) of a liquid crystal touch panel system that is used by a user to instruct the scanner apparatus to perform various operations, a CPU 1902 is a central processing unit that issues control instructions to respective units to be described later such that the units operate as instructed by the user interface unit 1, a ROM 1903 is a storage device that stores a software program with which the CPU 1902 controls the respective units according to an operation instruction received from the user interface unit 1901, a scanner unit 1904 is an optical original reading system. Note that a CCD of a reduction optical system or a contact CCD of a non-magnification optical system is used for the optical original reading system.

A memory control unit 1905 is a control unit that causes the RAM 1906 serving as a temporary storage to store the image data sent from the scanner unit 1904 and performs arbitration for image processing and speed adjustment of the next process, an image processing unit 1907 is a processing unit that applies spatial filter processing and moiré control processing to image data to be described in detail in Figs. 22 to 27, a RAM 1908 is a device that temporarily stores the image data for each line for these pieces of processing, and an external transfer unit 1909 is a transfer unit that transfers the image data subjected to the image processing in the image processing unit 1907 to the PC 1820. In addition, a storage 1921 is a storage such as the PC 1820.

Figs. 20A to 20D are explanatory diagram for explaining main sections of a scanner unit according to this example. Figs. 20A to 20C are schematic side sectional diagram, and Fig. 20D is a diagram showing a scanning direction with respect to an original.

As shown in Figs. 20A to 20D, the scanner unit 1904 has a traveling body 1941 that is mounted with an element for actually reading image data, an original conveying path 1942 that causes an original to pass a reading position 1945, and a white reference plate 1943 that becomes a reference for a white level of image data beside the reading position 1945. The white reference plate 1943 becomes a reference for a white level for performing shading correction for a reading optical system. The traveling body 1941 includes a lamp 1941 a that irradiates light in a direction of the reading position 1945 and a light-receiving element 1941 b such as a CCD that receives reflected light of the light. The original conveying path 1942 is formed of transparent glass (contact glass) 1944 such that an original can be read from a lower side of the conveying path only in the reading position.

Fig. 20A is the scanner unit when the reading optical system is in an idle state. When an instruction to read an original is received from the CPU 1902 of Fig. 19 in this state, as shown in Fig. 20B, the traveling body 1941 moves to a position of the white reference plate 1943, the lamp 1941a irradiates light on the white reference plate 1943, and the light-receiving element 1941 b receives light reflected from the white reflection plate 1943. A received optical signal is converted into an analog electric signal by a not-shown CCD and further subjected to A/D conversion, whereby a reading operation for generating a digital electric signal is performed. Then, the reading of the white reference plate 1943 for reading concentration of the entire white reference plate and setting the concentration as white reference data for several lines thereof ends. Next, when reading of an original is started, the traveling body 1941 moves to below the original reading position 1945 as shown in Fig. 20C and stops. When an original 1946 passes through the original conveying path 1942 above the traveling body 1941 at a constant speed at this point, light from the lamp 1941a irradiates the original 1946, and light reflected by the original 1946 is received by the light-receiving element 1941b as in the reading of the white reference plate. When it is assumed that a corner of a leading edge of the original 1946 (Fig. 20D) is an original reference point, the original 1946 is read line by line in a main scanning direction in Fig. 20D, reading in a sub-scanning direction is performed according to movement of the original 1946, and the entire original 1946 is read, for example, at a gradient of 600 DPI and eight bits (0 to 255 tones).

Note that the white reference data and the image data, which are read as described above, are used to, for example, perform shading correction processing as described below and perform correction of a reading white level of the reading optical system

Fig. 21 is a diagram explaining white reference data and correction data that is generated based on this data. In the figure, the white reference data is subjected to average processing for each pixel to be generated as white level correction data for one main scanning line. As shown in Fig. 21, white reference data for lines of an arbitrary number N is subjected to simple average processing for each pixel in a main scanning direction to be generated as shading correction data. The image data is subjected to shading correction processing for each line based on the shading correction data for one line generated in this way. In other words, when pixels of the light-receiving element 1941b are numbers 0, 1, ..., n from a top pixel, and it is assumed that image data before correction to be processed is Xk, image data after correction is Xk', and shading correction data for the pixels is Sk, the image data is subjected to shading correction processing according to Xk'=(Xk/Sk)×255 (k=0, 1, ..., n). However, in the case of Sk=0, it is assumed that Xk'=255.

Operations of the scanner apparatus will be explained with reference to Figs 18, 19, 20, and 21. While the scanner apparatus 1810 is in an idle state waiting for an operation instruction, when an operation instruction is inputted by a user from the user interface unit (operation unit) 1901, an operation instruction signal is transmitted to the CPU 1902. The CPU 1902 executes a program stored in the ROM 1903 through a CPU bus and transmits a control signal to the scanner unit 1904, the memory control unit 1905, the image processing unit 1907, and the external transfer unit 1909. The scanner unit 1904, which has received the control signal from the CPU 1902, reads an original in the form explained in Figs. 20 and 21 and transfers original data to the memory control unit 1905. The memory control unit 1905 causes the RAM 1906 like a SDRAM to store the transferred image data once, reads out the stored image data while adjusting a transfer speed of data to the next image processing unit 1907, and transfers the image data to the image processing unit 1907. The image processing unit 1907 performs image processing such as spatial filter processing and moiré control processing as described later with reference to Figs. 22 to 25 and transfers the image data subjected to the image processing to the external transfer unit 1909. The external transfer unit 1909 transfers the transferred image data subjected to the image processing to the storage 1921 such as the PC 1820, which is connected to an electric communication line such as a LAN, with software using a processor or the like or with dedicated hardware such as an ASIC.

Next, the image processing in the image processing unit 1907 will be explained in detail with reference to Figs. 22 to 25.

Fig. 22 is a block diagram for explaining main sections of a scanner apparatus. As shown in this figure, a spatial filter processing unit 1907a of the image processing unit 1907 includes, in a table format, spatial filters consisting of, for example, 3×3 masks for performing processing such as softening processing, sharpening processing, and emboss processing for an image. When a user selects, for example, the softening processing from the operation unit 1901 and instructs transfer of image processing data to the external storage 1921, the CPU 1901 reads out the spatial filter for the softening processing from the table, applies arithmetic processing for softening to each pixel, and calculates a predetermined tone number.

In this case, depending upon a method of setting a filter factor, a dynamic range (n bits) of image data after the spatial filter processing may be larger than a dynamic range (m bit) of inputted image data (n>m). When this occurs, conventionally, so-called rounding processing for directly bringing back the dynamic range of the image data to an original dynamic range is performed for reasons of an algorithm for image processing and a hardware configuration therefor.

Figs. 23A to 23C are for explaining wave changes before spatial filter processing (Fig. 23A) and after spatial filter processing (Fig. 23B) at the time when a horizontal axis is represented by image data continuing in a raster format and a vertical axis is represented by the number of bits, and shows a state in which a dynamic range (n bits) after the spatial filter processing (Fig. 23B) is larger than a dynamic range (m bits, n>m) before the spatial filter processing (Fig. 23A). If the dynamic range of n bits is directly rounded to m bits, a wave of the image data takes a trapezoidal shape with steep rising edge as indicated by a wave change shown in Fig. 23C, that is, non-linear processing is performed, which causes moiré.

Thus, the spatial filter processing unit 1907a calculates a maximum tone value of the image data after the spatial filter processing based on a spatial filter factor set in advance and expands a dynamic range of outputted image data to be larger than the value. In this example, since the dynamic range before the spatial filter processing is eight bits, if the calculated maximum tone value is, for example, 1024, the dynamic range is expanded to a dynamic range of eleven bits. Then, the spatial filter processing unit 1907a passes the image data of this dynamic range to the resolution conversion first processing unit 1907b.

The resolution conversion first processing unit 1907b applies conversion processing for a resolution to the image data received from the spatial filter processing unit 1907a using a well-known cubic function interpolation or the like.

Fig. 24 is a pixel arrangement diagram for explaining resolution conversion. The resolution conversion first processing unit 1907b generates image data in an order of, for example, G'n-1, Gn, G'n+1, Gn+1 ... from original pixels G (left in Fig. 24) received from the spatial filter processing unit 1907a and interpolation pixels G' (right in Fig. 24) around the original pixels G and obtains an interpolation pixel G'n by applying the cubic function interpolation to the image data.

When Gn and G'n have a resolution of 600 DPI, respectively, moire occurs with respect to a halftone dot image in both the cases. However, when it is considered that Gn and G'n are synthesized, there is a resolution of 1200 DPI, which is equivalent to reading the image at a resolution twice as dense. Thus, there is almost no moiré.

Fig. 25 is a diagram showing wave changes due to resolution conversion at the time when a horizontal axis is represented by image data continuing in a raster format and a vertical axis is represented by the number of bits. After the conversion, a wave before the conversion (top in Fig. 25) changes to a wave subjected to double density conversion (middle in Fig. 25).

Then, the resolution conversion first processing unit 1907b performs rounding for converting the image data subjected to the double density conversion into m bits (eight bits) while keeping the dynamic range of n bits (eleven bits). Since the resolution conversion first processing unit 1907b performs rounding of the image data with a double density resolution, the wave of the image data changes to a trapezoidal shape with a gentle rising edge as indicated by a wave change shown at the bottom in Fig. 25. In other words, since linear processing can be performed, occurrence of moiré due to a saturation operation can be controlled.

The image data subjected to the double density conversion and rounded to eight bits is passed to a gamma correction processing unit 1907c. The gamma correction processing unit 1907c applies gamma correction to the received image data. Since this gamma correction is also applied to image data with a double density resolution, even if somewhat steep gamma correction is performed, occurrence of moire due to non-linear processing can be controlled. Next, the image data subjected to the gamma correction is passed to a resolution conversion second processing unit 1907d.

The resolution conversion second processing unit 1907d applies smoothing filter processing to the image data with eight bits and 1200 DPI subjected to the gamma correction, and performs down-sampling to convert the image data into 600 DPI before the spatial filter processing.

The image data converted into the resolution before the spatial filter processing is transferred from the external transfer unit 9 to the storage 1921 such as a PC.

Note that the gamma correction processing unit 1907c is set between the resolution conversion first processing unit 1907b and the resolution conversion second processing unit 1907d. However, the gamma correction processing unit 1907c may be set between the resolution conversion second processing unit 1907d and the external transfer unit 1909 (see Fig. 26).

According to the scanner apparatus according to this example, image data read by the scanner apparatus 1810 connected to the LAN 40 is subjected to image processing such as spatial filter processing on the scanner apparatus 1810 side, and the image data subjected to the image processing is transferred to the external storage such as the PC 1820 connected to the LAN 40. Thus, a user can perform image processing without returning to the PC 1820 even if the scanner apparatus 1810 and the PC 1820 are set in places apart from each other. In this case, occurrence of moiré based on a saturation operation and the steep gamma correction can be controlled, and image data with a high image quality can be generated and transferred.

Note that, when steep gamma correction is not necessary, and the gamma correction processing unit 1907c is set between the resolution conversion second processing unit 1907d and the external transfer unit 1909, it is possible to reduce a size of hardware.

In addition, the scanner apparatus according to this example includes a format conversion unit 1911 between the image processing unit 1907 and the external transfer unit 1909 of the scanner apparatus described above.

Fig. 27 is a block diagram of a scanner apparatus having a format conversion unit. In Fig. 27, when a user instructs a compression transfer operation for image data from the operation unit 1901, the CPU 1902 instructs the format conversion unit 1911 provided between the image processing unit 1907 and the external transfer unit 1909 to perform a compression operation. Then, the format conversion unit 1911 applies reversible coding to the image data, compresses a capacity of the image data to convert the image data into an image format, which can be held, and passes the image data to the external transfer unit 1909. A general-purpose image data compression system such as the JPEG may be used for the format conversion by the reversible coding.

Note that the format conversion unit 1911 may be set downstream of the gamma correction processing unit 1907c, that is, may be set between the resolution conversion second processing unit 1907d and the external transfer unit 1909 (see Fig. 28).

In addition, when the use issues the operation instruction, operations of the scanner unit and the memory control,unit 1904 and 1905, the spatial filter processing unit 1907a, the resolution conversion first processing unit 1907b, the resolution conversion second processing unit 1907d, and the gamma correction processing unit 1907c are the same as those described in the above-mentioned embodiments and are the same in examples to be described below.

According to the scanner apparatus according to this example, before image data is transferred to an external storage like a PC, the image data is converted into a format for performing data compression by a compression system, a transfer speed to the external storage can be increased and a storage capacity of the external storage can be reduced while occurrence of moiré is controlled. When the general-purpose image data compression system is used, stored image data is easily handled in the external storage, and handlability of image data is improved.

Moreover, in the scanner apparatus according to this example, a halftone processing unit 1912 is provided between the image processing unit 1907 and the external transfer unit 1909.

Fig. 29 is a block diagram of a scanner apparatus having a halftone processing unit. In the figure, the halftone processing unit 1912 applies halftone processing (tone processing) such as a well-known error diffusion method, dither method, or simple quantization method to multilevel image data having dynamic range of plural bits to thereby convert the image data into image data of one bit/two tones without changing a resolution. According to a user's instruction for halftone processing from the operation unit 1901, the conversion processing is performed, and the processed image data is transferred from the external transfer unit 9 to the external storage 1921.

Note that the halftone processing unit 1912 may be set behind the gamma correction processing unit 1907c that is set between the resolution conversion second processing unit 1907d and the external transfer unit 1909 (see Fig. 30).

According to the scanner apparatus according to this example, since the halftone processing (tone processing) is performed before the scanner apparatus transfers image data to the external storage, the halftone processing can be applied to the image data for which occurrence of moiré is controlled.

Moreover, the scanner apparatus according to this example includes a tone binarization processing unit 1913 between the resolution conversion first processing unit 1907b and the resolution conversion second processing unit 1907d of the image processing unit 1907 and includes the halftone processing unit 1912 between the image processing unit 1907 and the external transfer unit 1909.

Fig. 31 is a block diagram of a scanner apparatus having a tone binarization processing unit and a halftone processing unit. In the figure, the halftone processing unit 1912 performs image data conversion of one bit/two tones without changing a resolution as described above, and the tone binarization processing unit 1913 applies tone binarization to the image data, which is subjected to resolution conversion to be converted into a high density by the resolution conversion first processing unit 1907b, according to an arbitrary threshold value. In the tone binarization in this block, according to an arbitrary threshold value in a dynamic range of image data, the image data is divided into a maximum value and a minimum value of the dynamic range to be binarized in tones while being kept as multilevel data. When a user issues an operation instruction for this processing from the operation unit 1901, the image processing is performed, and the image data subjected to the image processing is transferred from the external transfer unit 1909 to the external storage 1921.

In this way, according to the exemplary scanner apparatus, whereas, conventionally, since it is difficult to apply character recognition processing to image data subjected to halftone processing, which attaches importance to improvement of granularity of halftone by diffusing dots of image data, like an error diffusion method, the halftone processing is not used for image data that requires character recognition later, a character recognition ratio, which is the same as that in halftone processing not diffusing dots as in a simple quantization method, can be obtained because image data, for which moiré is controlled even if the halftone processing such as the error diffusion method is performed, is used.

### INDUSTRIAL APPLICABILITY

As described above, the image data processing apparatus, the image data processing method, the program, and the storage medium according to the invention are suitable for a printer, a copier, a facsimile apparatus, and a scanner apparatus, a multifunction product in which a printer function, a copying function, a facsimile function, and a scanner function are incorporated in one housing, an image data processing method used in these apparatuses, and a recording medium having stored therein an image data processing program and an image data processing program. In addition, the image reading apparatus of the invention is suitable for a copying machine, a scanner apparatus, a facsimile apparatus, and a multifunction product in which a copying function, a facsimile function, and a scanner function are incorporated in one housing.

## Claims

1. An image data processing apparatus (112) comprising:
an image data storing unit (102) that stores image data;
a transmitting unit that sends the image data to an external apparatus;
a spatial filter processing unit (201) that applies spatial filter processing, in which a dynamic range for output is set wider than a dynamic range for input;
a resolution increase processing unit (202) that applies resolution conversion processing for converting a present resolution into a resolution higher than the present resolution to the image data;
a gamma correction unit (203) that applies gamma correction processing to the image data;
wherein
the spatial filter processing unit (201) applies spatial filter processing to the image data stored in the image data storing unit (102);
the resolution increase processing unit (202) applies resolution conversion processing to the image data after the spatial filter processing by the spatial filter processing unit (201);
the gamma correction unit (203) applies gamma correction processing to the image data after the resolution conversion processing by the resolution increase processing unit (202); and
the transmitting unit sends the image data after the gamma correction processing by the gamma correction unit (203).

2. The image data processing apparatus (122) according to claim 1 further comprising:
a resolution reduction processing unit (206) that applies resolution conversion processing for converting a present resolution into a resolution lower than the present resolution to the image data;
wherein
the resolution increase processing unit (204) applies resolution conversion processing to the image data stored in the image data storing unit (102);
the spatial filter processing unit (205) applies spatial filter processing to the image data after the resolution conversion processing by the resolution increase processing unit (204);
the gamma correction unit (203) applies gamma correction processing to the image data after the spatial filter processing by the spatial filter processing unit (205);
the resolution reduction processing unit (206) applies resolution conversion processing to the image data after the gamma correction processing by the gamma correction unit (203); and
the transmitting unit sends the image data after the resolution conversion processing by the resolution reduction processing unit (206).

3. The image data processing apparatus according to claim 1, further comprising a resolution reduction processing unit (206) that applies resolution conversion processing for converting a present pixel density into a pixel density lower than the present pixel density to the image data after the processing by the gamma correction unit (203).

4. The image data processing apparatus according to claim 2 or 3, wherein
the resolution reduction processing unit (206) converts a resolution of the image data into a resolution before the resolution conversion processing by the resolution increase processing unit (202, 204).

5. The image data processing apparatus according to claim 1 or 2, further comprising a format converting unit (216) that converts the image data to be sent by the transmitting unit into a general-purpose format that can be inspected in the external apparatus.

6. The image data processing apparatus according to claim 1 or 2, wherein
the resolution increase processing unit (202, 204) performs the resolution conversion processing only for a main scanning direction.

7. The image data processing apparatus according to claim 1 or 2, wherein
the resolution increase processing unit (202, 204) performs resolution conversion processing for converting a resolution into a resolution obtained by multiplying a present invention by an integer equal to or larger than two

8. The image data processing apparatus according to claim 1 or 2, wherein
the resolution increase processing unit (202, 204) performs resolution conversion processing for converting image data with a resolution of 600 dpi into image data with a resolution of 1200 dpi.

9. An image data processing method comprising:
applying spatial filter processing (201) to image data, in which a dynamic range for output is set wider than a dynamic range for input,
applying resolution conversion processing (202) for converting a density into a high density to the image data;
applying gamma correction processing (203) to the image data; and
sending the image data to an external apparatus;
wherein
spatial filter processing (201) is applied to image data to be inputted;
resolution conversion processing (202) is applied to the image data after the spatial filter processing (201);
gamma correction processing (203) is applied to the image data after the resolution conversion processing (202); and
the image data is sent after the gamma correction processing (203) to the external apparatus.

10. The image data processing method according to claim 9 further comprising:
applying resolution conversion processing (206) for converting a present resolution into a resolution lower than the present resolution to the image data;
wherein
the resolution conversion processing (204) for converting a resolution into a high resolution is applied to image data to be inputted;
the spatial filter processing (205) is applied to the image data after the resolution conversion processing (204);
the gamma correction processing (203) is applied to the image data after the spatial filter processing (205);
the resolution conversion processing for converting a present resolution into a resolution lower than the present resolution is applied to the image data after the gamma correction processing (203); and
the image data are sent after the resolution conversion processing (206) to the external apparatus.

11. The image data processing method according to claim 9, further comprising applying resolution conversion processing for converting a present resolution into a resolution lower than the present resolution to the image data after performing the gamma correction processing.

12. The image data processing method according to claim 10 or 11, further comprising converting a resolution of the image data into a resolution before performing the resolution conversion processing for converting a resolution into a high resolution by the resolution conversion processing for converting a resolution into a low resolution.

13. The image data processing method according to claim 9 or 10, further comprising converting the image data to be sent at the sending into a general-purpose format that can be inspected in the external apparatus.

14. The image data processing method according to claim 9 or 10, wherein
the resolution conversion processing includes performing the resolution conversion processing only for a main scanning direction.

15. The image data processing method according to claim 9 or 10, wherein
the resolution conversion processing includes performing the resolution conversion processing for converting a resolution into a resolution obtained by multiplying a present invention by an integer equal to or larger than two.

16. The image data processing method according to claim 9 or 10, wherein
the resolution conversion processing includes performing the resolution conversion processing for converting image data with a resolution of 600 dpi into image data with a resolution of 1200 dpi.

17. A computer program that includes instructions which when executed on a computer cause the computer to execute:
applying a spatial filter processing (201) to image data in which a dynamic range for output is set wider than a dynamic range for input,
applying resolution conversion processing (202) for converting a density into a high density to the image data;
applying gamma correction processing (203) to the image data; and
sending the image data to an external apparatus;
wherein
spatial filter processing (201) is applied to image data to be inputted;
resolution conversion processing (202) is applied to the image data after the spatial filter processing (201);
gamma correction processing (203) is applied to the image data after the resolution conversion processing (202); and
the image data is sent after the gamma correction processing (203) to the external apparatus.

18. The computer program according to claim 17 further including instructions which when executed on a computer cause the computer to execute:
applying resolution conversion processing (206) for converting a present resolution into a resolution lower than the present resolution to the image data;
wherein
the resolution conversion processing (204) for converting a resolution into a high resolution is applied to the image data to be inputted;
the spatial filter processing (205) is applied to the image data after the resolution conversion processing (204);
the gamma correction processing (203) is applied to the image data after the spatial filter processing (205);
the resolution conversion processing for converting a present resolution into a resolution lower than the present resolution is applied to the image data after the gamma correction processing (203); and
the image data are sent after the resolution conversion processing (206) to an external apparatus.

19. The computer program according to claim 17, further comprising applying resolution conversion processing for converting a present resolution into a resolution lower than the present resolution to the image data after the gamma correction processing.

20. The computer program according to claim 18 or 19, further comprising converting a resolution of the image data into a resolution before performing the resolution conversion processing for converting a resolution into a high resolution by the resolution conversion processing for converting a resolution into a low resolution.

21. The computer program according to claim 17 or 18, further comprising converting the image data to be sent at the sending into a general-purpose format that can be inspected in the external apparatus.

22. The computer program according to claim 17 or 18, wherein
the resolution conversion processing includes performing the resolution conversion processing only for a main scanning direction.

23. The computer program according to claim 177 or 18, wherein
the resolution conversion processing includes performing the resolution conversion processing for converting a resolution into a resolution obtained by multiplying a present invention by an integer equal to or larger than two.

24. The computer program according to claim 17 or 18, wherein
the resolution conversion processing includes performing the resolution conversion processing for converting image data with a resolution of 600 dpi into image data with a resolution of 1200 dpi.

25. A computer readable recording medium having recorded therein the program according to claim 17 or 18.

## Patentansprüche

1. Bilddatenverarbeitungsvorrichtung (112), die umfasst:
eine Bilddatenspeichereinheit (102), die Bilddaten speichert;
eine Sendeeinheit, die die Bilddaten zu einer externen Vorrichtung sendet;
eine Verarbeitungseinheit (201) für räumliches Filtern, die räumliche Filterverarbeitung anwendet, in der ein dynamischer Bereich für den Ausgang eingestellt ist, der breiter ist als ein dynamischer Bereich für den Eingang;
eine Verarbeitungseinheit (202) für Auflösungserhöhung, die eine Auflösungsumwandlungsverarbeitung zum Umwandeln einer gegenwärtigen Auflösung in eine Auflösung, die höher ist als die gegenwärtige Auflösung, auf die Bilddaten anwendet;
eine Gammakorrektureinheit (203), die Gammakorrekturverarbeitung auf die Bilddaten anwendet;
wobei
die Verarbeitungseinheit (201) für räumliches Filtern die räumliche Filterverarbeitung auf die Bilddaten anwendet, die in der Bilddatenspeichereinheit (102) gespeichert sind;
die Verarbeitungseinheit (202) für Auflösungserhöhung die Auflösungsumwandlungsverarbeitung auf die Bilddaten nach der räumlichen Filterverarbeitung durch die Verarbeitungseinheit (201) für räumliches Filtern anwendet;
die Gammakorrektureinheit (203) die Gammakorrekturverarbeitung auf die Bilddaten nach der Auflösungsumwandlungsverarbeitung durch die Verarbeitungseinheit (202) für Auflösungserhöhung anwendet; und
die Sendeeinheit die Bilddaten nach der Gammakorrekturverarbeitung durch die Gammakorrektureinheit (203) sendet.

2. Bilddatenverarbeitungsvorrichtung (122) nach Anspruch 1, die ferner umfasst:
eine Verarbeitungseinheit (206) für Auflösungsverringerung, die eine Auflösungsumwandlungsverarbeitung zum Umwandeln einer gegenwärtigen Auflösung in eine Auflösung, die geringer ist als die gegenwärtige Auflösung, auf die Bilddaten anwendet;
wobei
die Verarbeitungseinheit (204) für Auflösungserhöhung die Auflösungsumwandlungsverarbeitung auf die Bilddaten anwendet, die in der Bilddatenspeichereinheit (102) gespeichert sind;
die Verarbeitungseinheit (205) für räumliches Filtern die räumliche Filterverarbeitung auf die Bilddaten nach der Auflösungsumwandlungsverarbeitung durch die Verarbeitungseinheit (204) für Auflösungserhöhung anwendet;
die Gammakorrektureinheit (203) die Gammakorrekturverarbeitung auf die Bilddaten nach der räumlichen Filterverarbeitung durch die Verarbeitungseinheit (205) für räumliches Filtern anwendet;
die Verarbeitungseinheit (206) für Auflösungsverringerung die Auflösungsumwandlungsverarbeitung auf die Bilddaten nach der Gammakorrekturverarbeitung durch die Gammakorrektureinheit (203) anwendet; und
die Sendeeinheit die Bilddaten nach der Auflösungsumwandlungsverarbeitung durch die Verarbeitungseinheit (206) für Auflösungsverringerung sendet.

3. Bilddatenverarbeitungsvorrichtung nach Anspruch 1, die ferner eine Verarbeitungseinheit (206) für Auflösungsverringerung umfasst, die Auflösungsumwandlungsverarbeitung zum Umwandeln der gegenwärtigen Pixeldichte in eine Pixeldichte, die geringer ist als die gegenwärtige Pixeldichte, auf die Bilddaten nach der Verarbeitung durch die Gammakorrektureinheit (203) anwendet.

4. Bilddatenverarbeitungsvorrichtung nach Anspruch 2 oder 3, wobei
die Verarbeitungseinheit (206) für Auflösungsverringerung eine Auflösung der Bilddaten in eine Auflösung vor der Auflösungsumwandlungsverarbeitung durch die Verarbeitungseinheit (202, 204) für Auflösungserhöhung umwandelt.

5. Bilddatenverarbeitungsvorrichtung nach Anspruch 1 oder 2, die ferner eine Formatumwandlungseinheit (216) umfasst, die die Bilddaten, die durch die Sendeeinheit gesendet werden sollen, in ein Universalformat umwandelt, das in der externen Vorrichtung geprüft werden kann.

6. Bilddatenverarbeitungsvorrichtung nach Anspruch 1 oder 2, wobei
die Verarbeitungseinheit (202, 204) für Auflösungserhöhung die Auflösungsumwandlungsverarbeitung nur für eine Hauptabtastrichtung ausführt.

7. Bilddatenverarbeitungsvorrichtung nach Anspruch 1 oder 2, wobei
die Verarbeitungseinheit (202, 204) für Auflösungserhöhung eine Auflösungsumwandlungsverarbeitung zum Umwandeln einer Auflösung in eine Auflösung, die durch Multiplizieren einer gegenwärtigen Auflösung mit einer ganzen Zahl gleich oder größer zwei erhalten wird, ausführt.

8. Bilddatenverarbeitungsvorrichtung nach Anspruch 1 oder 2, wobei
die Verarbeitungseinheit (202, 204) für Auflösungserhöhung eine Auflösungsumwandlungsverarbeitung zum Umwandeln von Bilddaten mit einer Auflösung von 600 dpi in Bilddaten mit einer Auflösung von 1200 dpi ausführt.

9. Bilddatenverarbeitungsverfahren, das umfasst:
Anwenden der räumlichen Filterverarbeitung (201) auf Bilddaten, in der der dynamische Bereich für den Ausgang weiter eingestellt ist als der dynamische Bereich für den Eingang;
Anwenden einer Auflösungsumwandlungsverarbeitung (202) auf die Bilddaten zum Umwandeln einer Dichte in eine hohe Dichte;
Anwenden einer Gammakorrekturverarbeitung (203) auf die Bilddaten; und
Senden der Bilddaten zu einer externen Vorrichtung;
wobei
räumliche Filterverarbeitung (201) auf die Bilddaten, die eingegeben werden sollen, angewendet wird;
Auflösungsumwandlungsverarbeitung (202) auf die Bilddaten nach der räumlichen Filterverarbeitung (201) angewendet wird;
Gammakorrekturverarbeitung (203) nach der Auflösungsumwandlungsverarbeitung (202) auf die Bilddaten angewendet wird; und
die Bilddaten nach der Gammakorrekturverarbeitung (203) zu der externen Vorrichtung gesendet werden.

10. Bilddatenverarbeitungsverfahren nach Anspruch 9, das ferner umfasst:
Anwenden der Auflösungsumwandlungsverarbeitung (206) zum Umwandeln einer gegenwärtigen Auflösung in eine Auflösung, die geringer ist als die gegenwärtige Auflösung, auf die Bilddaten;
wobei
die Auflösungsumwandlungsverarbeitung (204) zum Umwandeln einer Auflösung in eine hohe Auflösung auf die Bilddaten, die eingegeben werden sollen, angewendet wird;
die räumliche Filterverarbeitung (205) auf die Bilddaten nach der Auflösungsumwandlungsverarbeitung (204) angewendet wird;
die Gammakorrekturverarbeitung (203) auf die Bilddaten nach der räumlichen Filterverarbeitung (205) angewendet wird;
die Auflösungsumwandlungsverarbeitung zum Umwandeln der gegenwärtigen Auflösung in eine Auflösung, die geringer ist als die gegenwärtige Auflösung, auf die Bilddaten nach der Gammakorrekturverarbeitung (203) angewendet wird; und
die Bilddaten nach der Auflösungsumwandlungsverarbeitung (206) zu der externen Vorrichtung gesendet werden.

11. Bilddatenverarbeitungsverfahren nach Anspruch 9, das ferner das Anwenden der Auflösungsumwandlungsverarbeitung zum Umwandeln einer gegenwärtigen Auflösung in eine Auflösung, die geringer ist als die gegenwärtige Auflösung, auf die Bilddaten nach dem Ausführen der Gammakorrekturverarbeitung umfasst.

12. Bilddatenverarbeitungsverfahren nach Anspruch 10 oder 11, das ferner das Umwandeln einer Auflösung der Bilddaten in eine Auflösung vor dem Ausführen der Auflösungsumwandlungsverarbeitung zum Umwandeln einer Auflösung in eine hohe Auflösung durch die Auflösungsumwandlungsverarbeitung zum Umwandeln einer Auflösung in eine geringe Auflösung umfasst.

13. Bilddatenverarbeitungsverfahren nach Anspruch 9 oder 10, die ferner das Umwandeln der Bilddaten, die gesendet werden sollen, beim Senden in ein Universalformat, das in der externen Vorrichtung geprüft werden kann, umfasst.

14. Bilddatenverarbeitungsverfahren nach Anspruch 9 oder 10, wobei
die Auflösungsumwandlungsverarbeitung das Ausführen der Auflösungsumwandlungsverarbeitung nur für eine Hauptabtastrichtung umfasst.

15. Bilddatenverarbeitungsverfahren nach Anspruch 9 oder 10, wobei
die Auflösungsumwandlungsverarbeitung ferner das Ausführen der Auflösungsumwandlungsverarbeitung zum Umwandeln einer Auflösung in eine Auflösung, die durch Multiplizieren einer gegenwärtigen Auflösung mit einer ganzen Zahl gleich oder größer zwei erhalten wird, umfasst.

16. Bilddatenverarbeitungsverfahren nach Anspruch 9 oder 10, wobei
die Auflösungsumwandlungsverarbeitung das Ausführen der Auflösungsumwandlungsverarbeitung zum Umwandeln von Bilddaten mit einer Auflösung von 600 dpi in Bilddaten mit einer Auflösung von 1200 dpi umfasst.

17. Computerprogramm, das Anweisungen umfasst, die, wenn sie auf einem Computer ausgeführt werden, bewirken, dass der Computer ausführt:
Anwenden einer räumlichen Filterverarbeitung (201) auf Bilddaten, wobei der dynamische Bereich für den Ausgang weiter eingestellt ist als der dynamische Bereich für den Eingang,
Anwenden einer Auflösungsumwandlungsverarbeitung (202) auf die Bilddaten zum Umwandeln einer Dichte in eine hohe Dichte;
Anwenden einer Gammakorrekturverarbeitung (203) auf die Bilddaten; und
Senden der Bilddaten zu einer externen Vorrichtung;
wobei
räumliche Filterverarbeitung (201) auf die Bilddaten, die eingegeben werden sollen, angewendet wird;
Auflösungsumwandlungsverarbeitung (202) auf die Bilddaten nach der räumlichen Filterverarbeitung (201) angewendet wird;
Gammakorrekturverarbeitung (203) auf die Bilddaten nach der Auflösungsumwandlungsverarbeitung (202) angewendet wird; und
die Bilddaten nach der Gammakorrekturverarbeitung (203) zu der externen Vorrichtung gesendet werden.

18. Computerprogramm nach Anspruch 17, das ferner Anweisungen umfasst, die, wenn sie auf einem Computer ausgeführt werden, bewirken, dass der Computer ausführt:
Anwenden der Auflösungsumwandlungsverarbeitung (206) zum Umwandeln einer gegenwärtigen Auflösung in eine Auflösung, die geringer ist als die gegenwärtige Auflösung, auf die Bilddaten;
wobei
die Auflösungsumwandlungsverarbeitung (204) zum Umwandeln einer Auflösung in eine hohe Auflösung auf die Bilddaten, die eingegeben werden sollen, angewendet wird;
die räumliche Filterverarbeitung (205) auf die Bilddaten nach der Auflösungsumwandlungsverarbeitung (204) angewendet wird;
die Gammakorrekturverarbeitung (203) auf die Bilddaten nach der räumlichen Filterverarbeitung (205) angewendet wird;
die Auflösungsumwandlungsverarbeitung zum Umwandeln der gegenwärtigen Auflösung in eine Auflösung, die geringer ist als die gegenwärtige Auflösung, auf die Bilddaten nach der Gammakorrekturverarbeitung (203) angewendet wird; und
die Bilddaten nach der Auflösungsumwandlungsverarbeitung (206) zu einer externen Vorrichtung gesendet werden.

19. Computerprogramm nach Anspruch 17, das ferner das Anwenden der Auflösungsumwandlungsverarbeitung zum Umwandeln einer gegenwärtigen Auflösung in eine Auflösung, die geringer ist als die gegenwärtige Auflösung, auf die Bilddaten nach der Gammakorrekturverarbeitung umfasst.

20. Computerprogramm nach Anspruch 18 oder 19, das ferner das Umwandeln einer Auflösung der Bilddaten in eine Auflösung vor dem Ausführen der Auflösungsumwandlungsverarbeitung zum Umwandeln einer Auflösung in eine hohe Auflösung durch die Auflösungsumwandlungsverarbeitung zum Umwandeln einer Auflösung in eine geringe Auflösung umfasst.

21. Computerprogramm nach Anspruch 17 oder 18, die ferner das Umwandeln der Bilddaten, die gesendet werden sollen, beim Senden in ein Universalformat, das in der externen Vorrichtung geprüft werden kann, umfasst.

22. Computerprogramm nach Anspruch 17 oder 18, wobei die Auflösungsumwandlungsverarbeitung das Ausführen der Auflösungsumwandlungsverarbeitung nur für eine Hauptabtastrichtung umfasst.

23. Computerprogramm nach Anspruch 17 oder 18, wobei
die Auflösungsumwandlungsverarbeitung das Ausführen der Auflösungsumwandlungsverarbeitung zum Umwandeln einer Auflösung in eine Auflösung, die durch Multiplizieren einer gegenwärtigen Auflösung mit einer ganzen Zahl gleich oder größer zwei erhalten wird, umfasst.

24. Computerprogramm nach Anspruch 17 oder 18, wobei
die Auflösungsumwandlungsverarbeitung das Ausführen der Auflösungsumwandlungsverarbeitung zum Umwandeln von Bilddaten mit einer Auflösung von 600 dpi in Bilddaten mit einer Auflösung von 1200 dpi umfasst.

25. Computerlesbares Aufzeichnungsmedium, auf das das Programm nach Anspruch 17 oder 18 aufgezeichnet ist.

## Revendications

1. Appareil de traitement de données d'image (112) comprenant :
une unité de mémorisation de données d'image (102) qui mémorise des données d'image ;
une unité de transmission qui envoie les données d'image à un appareil externe ;
une unité de traitement de filtrage spatial (201) qui applique un traitement de filtrage spatial, dans lequel une plage dynamique pour une sortie est fixée plus large qu'une plage dynamique pour une entrée ;
une unité de traitement d'augmentation de résolution (202) qui applique un traitement de conversion de résolution pour convertir une résolution actuelle en une résolution supérieure à la résolution actuelle aux données d'image ;
une unité de correction de gamma (203) qui applique un traitement de correction de gamma aux données d'image ;
dans lequel
l'unité de traitement de filtrage spatial (201) applique un traitement de filtrage spatial aux données d'image mémorisées dans l'unité de mémorisation de données d'image (102) ;
l'unité de traitement d'augmentation de résolution (202) applique un traitement de conversion de résolution aux données d'image après le traitement de filtrage spatial effectué par l'unité de traitement de filtrage spatial (201) ;
l'unité de correction de gamma (203) applique un traitement de correction de gamma aux données d'image après le traitement de conversion de résolution effectué par l'unité de traitement d'augmentation de résolution (202) ; et
l'unité de transmission envoie les données d'image après le traitement de correction de gamma effectué par l'unité de correction de gamma (203).

2. Appareil de traitement de données d'image (122) selon la revendication 1, comprenant en outre :
une unité de traitement de réduction de résolution (206) qui applique un traitement de conversion de résolution pour convertir une résolution actuelle en une résolution inférieure à la résolution actuelle aux données d'image ;
dans lequel
l'unité de traitement d'augmentation de résolution (204) applique un traitement de conversion de résolution aux données d'image mémorisées dans l'unité de mémorisation d'image (102) ;
l'unité de traitement de filtrage spatial (205) applique un traitement de filtrage spatial aux données d'image après le traitement de conversion de résolution effectué par l'unité de traitement d'augmentation de résolution (204) ;
l'unité de correction de gamma (203) applique un traitement de correction de gamma aux données d'image après le traitement de filtrage spatial effectué par l'unité de traitement de filtrage spatial (205) ;
l'unité de traitement de réduction de résolution (206) applique un traitement de conversion de résolution aux données d'image après le traitement de correction de gamma effectué par l'unité de correction de gamma (203) ; et
l'unité de transmission envoie les données d'image après le traitement de conversion de résolution effectué par l'unité de traitement de réduction de résolution (206).

3. Appareil de traitement de données d'image selon la revendication 1, comprenant en outre une unité de traitement de réduction de résolution (206) qui applique un traitement de conversion de résolution pour convertir une densité de pixels actuelle en une densité de pixels inférieure à la densité de pixels actuelle aux données d'image après le traitement effectué par l'unité de correction de gamma (203).

4. Appareil de traitement de données d'image selon la revendication 2 ou 3, dans lequel
l'unité de traitement de réduction de résolution (206) convertit une résolution des données d'image en une résolution avant le traitement de conversion de résolution effectué par l'unité de traitement d'augmentation de résolution (202, 204).

5. Appareil de traitement de données d'image selon la revendication 1 ou 2, comprenant en outre une unité de conversion de format (216) qui convertit les données d'image à envoyer par l'unité de transmission en un format d'usage général qui peut être inspecté dans l'appareil externe.

6. Appareil de traitement de données d'image selon la revendication 1 ou 2, dans lequel
l'unité de traitement d'augmentation de résolution (202, 204) effectue le traitement de conversion de résolution uniquement pour une direction de balayage principal.

7. Appareil de traitement de données d'image selon la revendication 1 ou 2, dans lequel
l'unité de traitement d'augmentation de résolution (202, 204) effectue un traitement de conversion de résolution pour convertir une résolution en une résolution obtenue en multipliant une présente invention par un entier égal ou supérieur à deux.

8. Appareil de traitement de données d'image selon la revendication 1 ou 2, dans lequel
l'unité de traitement d'augmentation de résolution (202, 204) effectue un traitement de conversion de résolution pour convertir des données d'image avec une résolution de 600 dpi en des données d'image avec une résolution de 1200 dpi.

9. Procédé de traitement de données d'image comprenant :
l'application d'un traitement de filtrage spatial (201) à des données d'image, dans lequel une plage dynamique pour une sortie est fixée plus large qu'une plage dynamique pour une entrée,
l'application d'un traitement de conversion de résolution (202) pour convertir une densité en une densité plus élevée aux données d'image ;
l'application d'un traitement de correction de gamma (203) aux données d'image ; et
l'envoi des données d'image à un appareil externe ;
dans lequel
un traitement de filtrage spatial (201) est appliqué à des données d'image devant être entrées ;
un traitement de conversion de résolution (202) est appliqué aux données d'image après le traitement de filtrage spatial (201) ;
un traitement de correction de gamma (203) est appliqué aux données d'image après le traitement de conversion de résolution (202) ; et
les données d'image sont envoyées après le traitement de correction de gamma (203) à l'appareil externe.

10. Procédé de traitement de données d'image selon la revendication 9, comprenant en outre :
l'application d'un traitement de conversion de résolution (206) pour convertir une résolution actuelle en une résolution inférieure à la résolution actuelle aux données d'image ;
dans lequel
le traitement de conversion de résolution (204) pour convertir une résolution en une résolution élevée est appliqué à des données d'image devant être entrées ;
le traitement de filtrage spatial (205) est appliqué aux données d'image après le traitement de conversion de résolution (204) ;
le traitement de correction de gamma (203) est appliqué aux données d'image après le traitement de filtrage spatial (205) ;
le traitement de conversion de résolution pour convertir une résolution actuelle en une résolution inférieure à la résolution actuelle est appliqué aux données d'image après le traitement de correction de gamma (203) ; et
les données d'image sont envoyées après le traitement de conversion de résolution (206) à l'appareil externe.

11. Procédé de traitement de données d'image selon la revendication 9, comprenant en outre l'application d'un traitement de conversion de résolution pour convertir une résolution actuelle en une résolution inférieure à la résolution actuelle aux données d'image après l'exécution du traitement de correction de gamma.

12. Procédé de traitement de données d'image selon la revendication 10 ou 11, comprenant en outre la conversion d'une résolution des données d'image en une résolution avant l'exécution du traitement de conversion de résolution pour convertir une résolution en une résolution élevée par le traitement de conversion de résolution pour convertir une résolution en une faible résolution.

13. Procédé de traitement de données d'image selon la revendication 9 ou 10, comprenant en outre la conversion des données d'image à envoyer lors de l'envoi en un format d'usage général qui peut être inspecté dans l'appareil externe.

14. Procédé de traitement de données d'image selon la revendication 9 ou 10, dans lequel
le traitement de conversion de résolution comprend l'exécution du traitement de conversion de résolution uniquement pour une direction de balayage principal.

15. Procédé de traitement de données d'image selon la revendication 9 ou 10, dans lequel
le traitement de conversion de résolution comprend l'exécution du traitement de conversion de résolution pour convertir une résolution en une résolution obtenue en multipliant une présente invention par un entier égal ou supérieur à deux.

16. Procédé de traitement de données d'image selon la revendication 9 ou 10, dans lequel
le traitement de conversion de résolution comprend l'exécution du traitement de conversion de résolution pour convertir des données d'image avec une résolution de 600 dpi en des données d'image avec une résolution de 1200 dpi.

17. Programme d'ordinateur qui comprend des instructions qui, lorsqu'elles sont exécutées sur un ordinateur, amènent l'ordinateur à effectuer :
l'application d'un traitement de filtrage spatial (201) à des données d'image, dans lequel une plage dynamique pour une sortie est fixée plus large qu'une plage dynamique pour une entrée,
l'application d'un traitement de conversion de résolution (202) pour convertir une densité en une densité élevée aux données d'image ;
l'application d'un traitement de correction de gamma (203) aux données d'image ; et
l'envoi des données d'image à un appareil externe ;
dans lequel
un traitement de filtrage spatial (201) est appliqué à des données d'image devant être entrées ;
un traitement de conversion de résolution (202) est appliqué aux données d'image après le traitement de filtrage spatial (201) ;
un traitement de correction de gamma (203) est appliqué aux données d'image après le traitement de conversion de résolution (202) ; et
les données d'image sont envoyées après le traitement de correction de gamma (203) à l'appareil externe.

18. Programme d'ordinateur selon la revendication 17, comprenant en outre des instructions qui, lorsqu'elles sont exécutées sur un ordinateur, amènent l'ordinateur à effectuer :
l'application d'un traitement de conversion de résolution (206) pour convertir une résolution actuelle en une résolution inférieure à la résolution actuelle aux données d'image ;
dans lequel
le traitement de conversion de résolution (204) pour convertir une résolution en une résolution élevée est appliqué aux données d'image devant être entrées ;
le traitement de filtrage spatial (205) est appliqué aux données d'image après le traitement de conversion de résolution (204) ;
le traitement de correction de gamma (203) est appliqué aux données d'image après le traitement de filtrage spatial (205) ;
le traitement de conversion de résolution pour convertir une résolution actuelle en une résolution inférieure à la résolution actuelle est appliqué aux données d'image après le traitement de correction de gamma (203) ; et
les données d'image sont envoyées après le traitement de conversion de résolution (206) à un appareil externe.

19. Programme d'ordinateur selon la revendication 17, comprenant en outre l'application d'un traitement de conversion de résolution pour convertir une résolution actuelle en une résolution inférieure à la résolution actuelle aux données d'image après le traitement de correction de gamma.

20. Programme d'ordinateur selon la revendication 18 ou 19, comprenant en outre la conversion d'une résolution des données d'image en une résolution avant l'exécution du traitement de conversion de résolution pour convertir une résolution en une résolution élevée par le traitement de conversion de résolution pour convertir une résolution en une faible résolution.

21. Programme d'ordinateur selon la revendication 17 ou 18, comprenant en outre la conversion des données d'image à envoyer lors de l'envoi en un format d'usage général qui peut être inspecté dans l'appareil externe.

22. Programme d'ordinateur selon la revendication 17 ou 18, dans lequel
le traitement de conversion de résolution comprend l'exécution du traitement de conversion de résolution uniquement pour une direction de balayage principal.

23. Programme d'ordinateur selon la revendication 17 ou 18, dans lequel
le traitement de conversion de résolution comprend l'exécution du traitement de conversion de résolution pour convertir une résolution en une résolution obtenue en multipliant une présente invention par un entier égal ou supérieur à deux.

24. Programme d'ordinateur selon la revendication 17 ou 18, dans lequel
le traitement de conversion de résolution comprend l'exécution du traitement de conversion de résolution pour convertir des données d'image avec une résolution de 600 dpi en des données d'image avec une résolution de 1200 dpi.

25. Support d'enregistrement pouvant être lu par un ordinateur sur lequel le programme selon la revendication 17 ou 18 est enregistré.
